# EUROPÄISCHE PATENTSCHRIFT

(11) **EP 1 943 614 B1**
(45) Veröffentlichungstag und Bekanntmachung des Hinweises auf die Patenterteilung: **14.12.2011**
(21) Anmeldenummer: 06806534.1
(22) Anmeldetag: 25.10.2006
(51) Int. Cl.: G06K 19/077, H01Q 13/10

(54) **TRANSPONDER**
TRANSPONDER
TRANSPONDEUR

(30) Priorität: 26.10.2005 DE 102005051260; 26.06.2006 DE 102006029248
(43) Veröffentlichungstag der Anmeldung: 16.07.2008
(73) Patentinhaber: Giesecke & Devrient GmbH, 81677 München (DE)
(72) Erfinder: FINKENZELLER, Klaus, 85774 Unterföhring (DE); KLUGE, Stefan, 80997 München (DE); SCHRÖDER, Sönke, 81541 München (DE)
(74) Vertreter: Klunker . Schmitt-Nilson . Hirsch
(86) Internationale Anmeldenummer: PCT/EP2006/010280
(87) Internationale Veröffentlichungsnummer: WO 2007/048589

(56) Entgegenhaltungen:
- WO-A2-01/73675
- US-B1- 6 307 520

## Beschreibung

Die vorliegende Erfindung betrifft ein Transponderchipmodul für einen Transponder mit Schlitzantenne. Die Erfindung betrifft des weiteren einen Transponder mit einem solchen Transponderchipmodul und einer Schlitzantenne.

Zur automatischen Identifikation von Produkten aller Art im Handel, in Produktionsbetrieben und Materialflußsystemen werden unter anderem RFID-Systeme (Radiofrequenzidentifikationssysteme) eingesetzt. Sie beinhalten einen Transponder, der an dem zu identifizierenden Objekt angebracht ist, und ein Erfassungs- oder Lesegerät. Der Transponder, welcher den eigentlichen Datenträger eines RFID-Systems darstellt, weist üblicherweise ein Koppelelement sowie einen elektronischen Mikrochip auf. Außerhalb des Ansprechbereichs eines Lesegerätes verhält sich der Transponder, der in der Regel keine eigene Spannungsversorgung besitzt, vollkommen passiv. Erst innerhalb des Ansprechbereichs eines Lesegerätes wird der Transponder aktiviert. Die zum Betrieb des Transponders benötigte Energie wird ebenso wie die Daten durch ein Koppelelement kontaktlos zum Transponder übertragen. Als Koppelelement kann zum Beispiel eine Antenne zum Einsatz kommen.

Diese Systeme sind weit verbreitet und funktionieren gut. Schwierig kann jedoch die Identifikation von Objekten sein, die eine Metalloberfläche darstellen, und bei denen eine Montage eines RFID-Transponders vorgesehen ist, welcher im UHF-Bereich (868 MHz, 2,45 GHz) Signale aussendet. Durch Reflexionen an der Metalloberfläche sowie durch Wirbelstromverluste wird der Wirkungsgrad der üblicherweise verwendeten Dipolantennen (und deren verwandte Bauformen) stark herabgesetzt. Dies kann je nach dem Abstand der Antenne zur Metalloberfläche dazu führen, dass die Lesereichweite eines Transponders stark abnimmt und im Extremfall gegen Null geht.

Eine Antennenbauform, welche eine ausreichend große Metalloberfläche als Massefläche nutzbar macht, ist beispielsweise die Patchantenne. Eine solche Antenne kann ohne Performanceverluste auf eine Metalloberfläche aufgebracht werden. Eine derartige Anordnung ist zum Beispiel in Finkenzeller, "RFID-Handbuch", 3. Auflage, Carl Hanser-Verlag, München, erläutert. Ein Nachteil bei dieser Lösung ist, dass die Fläche der Antenne je nach Frequenzbereich recht groß und somit unhandlich wird.

Eine technisch geeignetere Lösung ist daher die Verwendung der Metalloberfläche selbst als Antenne. Eine solche Lösung wird zum Beispiel durch eine Schlitzantenne gebildet, bei der ein Längsschlitz der Länge von etwa λ/2 in der Metalloberfläche einen linear polarisierten Dipolstrahler darstellt. Die Einspeisung eines Hochfrequenzsignales erfolgt dabei in zwei parallel zueinander angeordnete Längskanten des Schlitzes. Nachteilig ist hierbei, dass gemäß dem Stand der Technik die Einspeisung des Signals in die Längskanten des Schlitzes aufwendige Vorrichtungen und Verfahren erfordert.

Aus der WO 01/73675 A2 ist ein Transponderchipmodul für einen Transponder mit Schlitzantenne bekannt. Der Transponderchip ist mit zwei Kontaktstellen elektrisch verbunden, die das Transponderchipmodul mit einander gegenüberliegenden Seiten der Schlitzantenne kontaktieren. Dabei wird ein im Gehäuse eines Gegenstandes vorhandener Schlitz als Schlitzantenne genutzt.

Es ist daher eine Aufgabe der vorliegenden Erfindung, eine Einspeisung eines Signals in eine Schlitzantenne mit einer einfach herstellbaren Vorrichtung oder einem Modul und damit einen einfach zu fertigenden Transponder zu schaffen.

Diese Aufgabe wird durch einen Transponder und ein Transponderchipmodul mit den Merkmalen der unabhängigen Ansprüche gelöst. In davon abhängigen Ansprüchen sind vorteilhafte Ausgestaltungen und Weiterbildungen der Erfindung angegeben.

Der erfindungsgemäße Transponder umfaßt gemäß einer ersten Ausführungsform ein Transponderchipmodul mit einem Transponderchip und zwei mit dem Transponderchip elektrisch verbundene Kontaktstellen zum Kontaktieren des Transponderchipmoduls mit einander gegenüberliegenden Seiten der Schlitzantenne, wobei die zwei Kontaktstellen an voneinander wegweisenden Oberflächen des Transponderchipmoduls angeordnet sind. Dabei kann es sich um eine galvanisch leitende Kontaktierung handeln. Aber auch eine kapazitive oder induktive Kopplung ist möglich. Dadurch ist es möglich, in dem Schlitz der Schlitzantenne einander gegenüberliegende Innenflächen des Schlitzes mittels der Kontaktstellen direkt, kapazitiv oder induktiv zu kontaktieren. Vorzugsweise sind die voneinander wegweisenden Oberflächen parallel zueinander angeordnet. Damit lassen sich parallel zueinander angeordnete Innenseiten des Schlitzes auf einfache Weise kontaktieren.

Erfindungsgemäß ist die Schlitzantenne als sogenannte "Boxed-In"-Schlitzantenne ausgeführt (J.D. Kraus, "Antennas for all applications", dritte Auflage, McGraw Hill 2002, Seite 306). Der Antennenschlitz ist bei einer derartigen Antenne als Vertiefung ausgebildet, die lediglich im Bereich des Antennenschlitzes offen ist. Die Vertiefung kann quaderförmig sein. Die Tiefe des Antennenschlitzes beträgt ungefähr λ/4 für einen schmalen Schlitz, das heißt die Tiefe beträgt in etwa die Hälfte der Schlitzlänge. Allerdings erhöht sich die Eingangsimpedanz einer solchen Schlitzantenne gegenüber einer einfachen Schlitzantenne etwa um den Faktor 2.

Es ist vorteilhaft, wenn die Kontaktstelle zur kraftschlüssigen Montage in dem Schlitz ausgebildet ist. Bei einer solchen Konstruktion ist ein Einstecken des Transponderchipmoduls in den Schlitz der Schlitzantenne möglich, so dass ein aufwendiges (Reflow-)Löten, Ultraschallschweißen oder ähnliches für eine Kontaktierung der Längsseiten des Schlitzes nicht mehr erforderlich ist. Die Kontaktstelle kann dabei als Klemmvorrichtung, Schneidklemmvorrichtung oder Klippvorrichtung, insbesondere als selbstsichernde Schnappverbindung, ausgebildet sein. Somit kann das Transponderchipmodul einfach und kostengünstig mit dem Schlitz der Schlitzantenne montiert werden, wobei keine aufwendige Justage mehr erforderlich ist.

Vorzugsweise ist das Transponderchipmodul im Querschnitt im wesentlichen T-förmig ausgebildet, und die Kontaktstellen sind am zentralen T-Schenkel vorgesehen. Das Transponderchipmodul ist somit ein einfach handhabbares Montageteil, wobei durch die T-Form ein einfaches Einsetzen des Transponderchipmoduls in den Schlitz möglich ist. Der horizontale T-Schenkel des Transponderchipmoduls kann somit eine Anlage mit dem Trägermaterial bilden, in dem der Schlitz der Schlitzantenne eingearbeitet ist. Durch eine solche geometrische Form ist eine sichere Position des Transponderchipmoduls im Schlitz erzielbar.

Gemäß einer bevorzugten Ausführungsform ist in dem Transponderchipmodul mindestens ein Anpassungsmittel zum Anpassen einer Eingangsimpedanz der Schlitzantenne an eine Eingangsimpedanz des Transponderchips vorgesehen. Damit ist es möglich, dass eine hochohmige Eingangsimpedanz der Schlitzantenne mit Spulen, Kondensatoren, Anpassungsleitungen, Ferritperlen etc. auf eine Eingangsimpedanz des Transponderchips transformiert werden kann. Vorzugsweise weist das Transponderchipmodul eine Länge auf, welche mindestens die Hälfte der Länge des Schlitzes beträgt. Damit kann das Ende des Schlitzes der Schlitzantenne als Anschlag dienen, so dass eine relativ einfache Montage möglich ist, ohne die Position des Transponderchipmoduls aufwendig zu justieren.

Das Transponderchipmodul kann auch mit einer Markierung versehen sein. Dies erlaubt es, eine optische Identifizierung des Transponderchipmoduls auch bei einem Defekt des Transponderchips oder eines Lesegerätes zu erreichen. Die Markierung kann auch der exakten Positionierung des Transponderchipmoduls relativ zum Schlitz der Schlitzantenne dienen, wenn der Schlitz eine entsprechende Markierung besitzt.

Vorzugsweise ist der Transponderchip des Transponderchipmoduls in eine Formmasse eingebettet. Die Formmasse kann eine Kunststoffmasse oder ähnliches sein, um den Chip gegen äußere Einflüsse zu schützen. Dies kann von Bedeutung sein, wenn der Chip auf einem Gegenstand außenseitig vorgesehen ist. Soweit das Transponderchipmodul im Schlitz der Antenne angeordnet wird, besteht der betreffende Teil des Moduls möglichst vollständig aus einem dielektrischen Material.

Der erfindungsgemäße Transponder umfaßt das Transponderchipmodul und eine Schlitzantenne, wobei das Transponderchipmodul in den Schlitz der Schlitzantenne derart eingesetzt ist, dass es mit den zwei Kontaktstellen einander gegenüberliegende Innenflächen des Schlitzes kontaktiert. In der Schlitzantenne kann eine Klemmvorrichtung, Schneidklemmvorrichtung oder Klippvorrichtung vorgesehen sein. Derartige Klemmvorrichtungen in der Schlitzantenne selbst können eventuell kostengünstiger herzustellen sein, als wenn sie am Transponderchipmodul vorgesehen sind. Gleichwohl ist es möglich, dass sowohl das Transponderchipmodul als auch die Schlitzantenne derartige Klemmvorrichtungen aufweisen. Ist zum Beispiel das die Schlitzantenne bildende Trägermaterial durch eine Fahrzeugkarosserie gebildet, können Klemmvorrichtungen dort einfach eingebracht werden.

Gemäß einer bevorzugten Ausführungsvariante kann die Vertiefung der Boxed-In-Antenne prismen- oder pyramidenförmig sein. Das heißt, die Vertiefung besitzt einen dreieckigen Querschnitt entlang der Schlitzlänge, wobei die Schmalseiten der Vertiefung etwa 3/4 λ betragen und die Schlitzlänge unverändert etwa 1/2 λ beträgt.

Falls das die Schlitzantenne bildende Trägermaterial durch ein Metallblech oder ein anderes elektrisch leitfähiges plattenförmiges Material, insbesondere durch eine Fahrzeugkarosserie, gebildet wird, kann die Vertiefung der Boxed-In-Antenne durch einen einseitig geschlossenen, elektrisch leitfähigen Kasten an einer Seite des Schlitzes gebildet werden. Dieser Kasten kann aus Metallblechen, einem Kunststoff mit leitfähiger Beschichtung oder einem anderen leitfähigen Material hergestellt sein. Zur besseren Befestigung des Kastens in einer entsprechenden Durchbrechung des Trägermaterials kann am schlitzseitigen Ende des Kastens ein Kragen vorgesehen sein, der nach dem Einsetzen des Kastens in die Durchbrechung mit der leitenden Fläche des Trägermaterials elektrisch leitend verbunden wird. Eine derartige Boxed-In-Antenne bietet den Vorteil, dass der Schlitz geschlossen ist und staub-, sowie gegebenenfalls auch wasserdicht ausgeführt werden kann. Ein weiterer besonderer Vorteil der Boxed-In-Antenne besteht auch darin, dass benachbarte Metallflächen auf der Innenseite des Trägermaterials, das heißt auf der Seite des Trägermaterials, an der sich der Kasten befindet, die Antenne nicht störend beeinflussen können, da auf dieser Seite keine elektromagnetischen Wellen von der Antenne abgestrahlt werden.

Andererseits kann die Boxed-In-Antenne auch als entsprechende Vertiefung in einem Vollmaterial ausgebildet sein, beispielsweise entweder quaderförmig oder prismen- oder pyramidenförmig. Diese Variante eignet sich besonders für Transponderanordnungen an massiven Metallkonstruktionen, wie zum Beispiel zur Kennzeichnung eines Motorblocks mittels eines Transponders. Die Vertiefung kann dabei z.B. aus dem massiven Material herausgefräst werden, und an den Speisepunkten der so erzeugten Schlitzantenne kann der Transponderchip befestigt werden.

Vorzugsweise ist die Boxed-In-Antenne mit einem dielektrischen Material gefüllt, zum Beispiel durch Vergießen des Hohlraums der Boxed-In-Antenne mit einer aushärtbaren dielektrischen Vergussmasse. Durch den Einfluss des Dielektrikums wird die Wellenlänge einer elektromagnetischen Welle bei konstanter Frequenz verkürzt, wodurch auch die physischen Abmessungen des Schlitzes und des Hohlraums verringert werden können. Dabei ist ein Material mit hoher Dielektrizitätskonstante εᵣ zu bevorzugen, da der vorbeschriebene Effekt mit steigender Dielektrizitätskonstante zunimmt.

Das dielektrische Füllmaterial umgibt vorzugsweise zumindest die Kontaktelemente des Transponderchipmoduls, die zur Kontaktierung der Speisepunkte der Boxed-In-Antenne dienen, und umgibt vorzugsweise auch den Transponderchip selbst, insbesondere wenn dieser innerhalb des Schlitzes der Schlitzantenne angeordnet ist. Durch diese Verkapselung werden die Kontaktstellen und der Chip vor Umwelteinflüssen wirkungsvoll geschützt.

Um die exakte Positionierung des Transponderchipmoduls zu erleichtern, sieht eine bevorzugte Ausgestaltung der Erfindung vor, die Breite des Antennenschlitzes an zumindest einer Stelle zu variieren und am Transpondermodul eine daran angepasste Kontur auszubilden, so dass beim Einsetzen des Transponderchipmoduls in den Schlitz die Lage des Transponderchipmoduls vorgegeben ist. Die Breitenveränderung erstreckt sich nur über einen geringen Bruchteil der Schlitzlänge, vorzugsweise über eine Strecke von nur 10 % oder weniger der Schlitzlänge, da sich die Breitenveränderung dann auf die elektrischen Eigenschaften weitaus geringer auswirkt, als eine konstante Breitenänderung des Schlitzes auf seiner gesamten Länge. Zudem ist es bei einem nur partiell in seiner Breite veränderten Schlitz einfacher, den verbleibenden Hohlraum zu versiegeln, zum Beispiel durch Einspritzen einer Dichtmasse aus dielektrischem Material. Durch das partielle Verbreitern des Schlitzes wird das Einsetzen, insbesondere das Einpressen des Transponder chipmoduls in den Schlitz einfacher und der Schlitz kann ansonsten vergleichsweise schmal ausgestaltet werden.

Die Verbreiterung des Schlitzes und die daran entsprechend angepasste Kontur des Transponderchipmoduls können im Querschnitt rechteckig, kreisförmig, rautenförmig oder sternförmig sein oder Mischformen daraus bilden. Im Einzelfall kann es zweckmäßig sein, Maßnahmen zu treffen, um das Chipmodul gegen den Fehlerfall einer um 90° verdrehten Montage zu sichern, beispielsweise mittels am Transponderchipmodul ausgebildeter Nasen, die in den nicht verbreiterten Bereich des Schlitzes hineinragen.

Vorzugsweise ist das Transponderchipmodul außerhalb der Mitte des Schlitzes der Schlitzantenne in Richtung zu einem Ende des Schlitzes angeordnet. Durch diese Maßnahme sinkt die Eingangsimpedanz der Schlitzantenne und kann so an die Chipimpedanz angepaßt werden. Ist mindestens ein Ende des Schlitzes beispielsweise T-förmig oder V-förmig ausgebildet, lassen sich die Außenabmessungen der Schlitzantenne verringern, ohne ihre Performance wesentlich zu beeinflussen. Vorzugsweise durch eine T-Form oder V-Form am Schlitzende kann eine Dachkapazität gebildet werden, so dass sich dadurch ein Verkürzungsfaktor erzielen läßt, mit dem die Schlitzlänge auf die jeweilige Wellenlänge angepaßt werden kann.

Gemäß einer zweiten Ausführungsform der Erfindung umfasst das Transponderchipmodul einen Teil der Schlitzantenne. Insbesondere sind zumindest Teile des Schlitzes an gegenüberliegenden Oberflächen des Chipmoduls angeordnet oder vorzugsweise ist ein Teil des Schlitzes oder der gesamte Schlitz der Schlitzantenne Bestandteil des Transponderchipmoduls. Das Transponderchipmodul wird dann in eine daran angepasste Aussparung eines Trägermaterials, insbesondere also in ein Metallblech oder dergleichen, eingesetzt.

Das Transponderchipmodul umfaßt einen geschlossenen elektrisch leitfähigen Rahmen, dessen Innenabmessungen so gewählt sind, dass sie den Schlitz der Schlitzantenne bilden. Der Transponderchip ist dann an den entsprechenden Anschlusspunkten dieses Schlitzes angeschlossen. Der Einbaurahmen, der den Schlitz der Schlitzantenne definiert, ist seinerseits als Boxed-In-Antenne ausgebildet sein. Dazu erstreckt sich der Rahmen zu einer Seite des Schlitzes mit einer Tiefe von etwa λ/4 und ist bodenseitig verschlossen, so dass sich wiederum eine kastenartige, einseitig offene Struktur ergibt. Diese kastenartige Struktur kann wiederum quaderförmig oder prismen- oder pyramidenförmig sein. Ein solches Transponderchipmodul kann dann in die Aussparung eingesetzt werden, wobei der Rahmen vorzugsweise wiederum einen Kragen besitzt, wie dies zuvor im Zusammenhang mit der kastenförmigen Boxed-In-Antenne erläutert wurde.

Obwohl der Rahmen vorzugsweise ein geschlossener Rahmen ist, kann der Rahmen bzw. Kragen auch nur an einzelnen Seiten des Transponderchipmoduls vorgesehen sein, beispielsweise an den beiden einander gegenüberliegenden Längsseiten des Schlitzes, so dass der Rest des Schlitzes und damit die Charakteristik der Schlitzantenne durch die Kontur der Aussparung in dem Trägermaterial vorgegeben wird.

Der Vorteil eines insbesondere geschlossenen Einbaurahmens besteht darin, dass der Chip bereits während der Fertigung des Transponderchipmoduls in einer vom späteren Einbauobjekt getrennten Fertigungsumgebung exakt an den gewünschten Speisepunkten angeschlossen werden kann, da diese durch den den Schlitz bildenden Einbaurahmen vorgegeben werden. Dadurch wird gleichzeitig die Auswahl eines optimalen Kontaktierverfahrens zwischen dem Transponderchip und dem Schlitz, das heißt zwischen Chip und Einbaurahmen, ermöglicht. Die Wahl zwischen einer galvanischen Kontaktierung durch Löten, Kleben, Schweißen etc. oder einer kapazitiven Kontaktierung wird dadurch freier.

Vorzugsweise ist der Einbaurahmen wiederum mit einem Dielektrikum gefüllt, welches wiederum vorzugsweise zumindest die Kontaktschnittstelle des Transponderchips und gegebenenfalls auch den Transponderchip selbst umschließt. Wie bereits erwähnt, wird durch den Einfluß des Dielektrikums die Wellenlänge einer elektromagnetischen Welle bei konstanter Frequenz verkürzt, wodurch auch die mechanischen Abmessungen des Rahmens verringert werden können. Ein weiterer Vorteil besteht darin, dass die Aussparung in dem Trägermaterial, in die das Transponderchipmodul eingesetzt wird, mittels der dielektrischen Füllung gegen Staub und Feuchtigkeit abgedichtet werden kann.

Gemäß einer anderen Variante des den Antennenschlitz, insbesondere die Boxed-In-Antenne, bildenden Transponderchipmoduls wird der Transponderchip nicht in einen selbsttragenden, mit Dielektrikum gefüllten Rahmen eingesetzt, sondern der Transponderchip wird in einen vorgefertigten quaderförmigen Block aus dielektrischem Material eingesetzt, der auf fünf seiner insgesamt sechs Seiten (bzw. seiner fünf Seiten im Falle einer prismenförmigen Boxed-In-Antenne) mit einer elektrisch leitenden Oberfläche, insbesondere einer Metallbeschichtung, versehen ist. Die später den Schlitz ausbildende Schmalseite ist entweder von vornherein nicht metallisiert oder die Metallisierung wird nachträglich zum Beispiel durch Abfräsen oder Abstanzen eines Überstandes entfernt.

Der Transponderchip kann bei dieser Variante entweder nachträglich oder bereits bei der Herstellung des dielektrischen Blocks so in den Block eingebracht werden, dass die Anschlüsse des Chips mit der später aufzubringenden Metallbeschichtung einen elektrischen Kontakt herstellen, sei es eine galvanische oder eine kapazitive Kontaktierung. Die Kontakte des Transponderchips befinden sich dabei aus den eingangs genannten Gründen zum Zwecke der Impedanzreduzierung nahe einer Schmalseite des Quaders.

Diese Antennenvariante eignet sich besonders gut auch für keramische Werkstoffe. Keramische Werkstoffe zeichnen sich durch eine besonders hohe Dielektrizitätskonstante aus und ermöglichen daher besonders kleine Antennenbauformen.

Gemäß einem bevorzugten Verfahren zur Herstellung dieser Antennenvariante basierend auf einem dielektrischen Block mit Metallhülle wird der Transponderchip zunächst in ein Modul derart verpackt, dass zwei gegenüberliegende Stirnflächen einen galvanischen Kontakt darstellen, die mit den beiden Anschlüssen des Transponderchips im Inneren des Moduls verbunden sind. Die Breite des Moduls bzw. der Abstand der galvanischen Kontakte entspricht dabei der Breite des späteren Schlitzes der Antenne. Anschließend wird dieses Modul in einen Block aus dielektrischem Material, zum Beispiel Kunststoff oder Keramik, eingesetzt, der zur Aufnahme des Moduls eine entsprechend ausgebildete Nut aufweist. Die Abmessungen der Nut entsprechen vorzugsweise in Breite und Höhe, insbesondere aber in der Länge, den Abmessungen des Chipmoduls. Das Chipmodul kann in der Nut beispielsweise durch Kleben fixiert werden. Anschließend werden alle Seiten des Quaders mit einer elektrisch leitenden Oberfläche überzogen, zum Beispiel metallisch beschichtet, ausgenommen die später den Schlitz ausbildende Schmalseite des Quaders. Dies schließt die Möglichkeit ein, zunächst alle sechs Seiten zu metallisieren, da dies gegebenenfalls leichter fertigungstechnisch zu realisieren ist, und in einem separaten Arbeitsschritt die den Schlitz ausbildende Schmalseite von der Metallisierung zu befreien. Das so fertiggestellte Transponderchipmodul, welches bereits einen wesentlichen Teil der Schlitzantenne umfasst, wird schließlich in eine entsprechende Ausnehmung eines Trägermaterials eingesetzt. Dabei schließt die nicht metallisierte Schmalseite des Blocks bevorzugt bündig mit der Oberfläche des Trägermaterials ab. Zur mechanisch stabilen Befestigung können verschiedene Klemmvorrichtungen vorgesehen sein, beispielsweise auch ein Kragen, wie er zuvor bereits erläutert wurde.

Eine bevorzugte Weiterbildung eines erfindungsgemäßen Transponderchipmoduls oder Transponders, bei dem die Schlitzantenne als Boxed-In-Antenne realisiert ist, sieht vor, auf der Außenseite zusätzliche Komponenten anzubringen, wie zum Beispiel eine Batterie zur Spannungsversorgung des Transponderchips, Halbleiterbauelemente (Transponderchip, Mikroprozessor, Hochfrequenz-Schnittstelle, und dergleichen), Anzeigeelemente (LED, Display), passive Bauelemente und gegebenenfalls eine Leiterplatte zur Aufnahme der Komponenten. Die Einspeisung der Antenne kann dabei gegebenenfalls über eine Speiseleitung erfolgen, zum Beispiel eine Koaxialleitung, Semi-Rigid-Leitung und dergleichen, die von den Speisepunkten der Antenne zu den an der Außenseite der Boxed-In-Antenne angebrachten Komponenten führt. Diese Möglichkeit zur Erweiterung der Funktionalität einer Boxed-In-Antenne ist besonders einfach bei der durch einen metallisierten Quader gebildeten Boxed-In-Antenne zu realisieren.

Dadurch ist es beispielsweise möglich, mittels einer Batterie die Lesereichweite des Transponders zu vergrößern. Auch der Betrieb von Halbleiterbauteilen mit größerer Stromaufnahme, zum Beispiel eines Mikroprozessorchips mit einem Chipkartenbetriebssystem, wird durch eine Batteriespeisung ermöglicht. Dabei kann es vorteilhaft sein, das Transponderchipmodul so auszugestalten, dass die Batterie erst nach dem Einbau des Transponderchipmoduls in das Trägermaterial am Transponder angebracht wird. Dies hat den Vorteil, dass das Trägermaterial, beispielsweise eine Autokarosserie, zusammen mit dem eingebauten Transponder auch Fertigungsschritte durchlaufen kann, zum Beispiel eine Lackierstraße mit anschließender Trocknung, ohne dass die Batterie zum Beispiel durch erhöhte Temperaturen geschädigt wird.

An der Außenseite der Boxed-In-Antenne kann auch in Ergänzung zu der von der Schlitzantenne selbst gebildeten Schnittstelle eine weitere Schnittstelle realisiert sein, über die Daten und/oder Energie an den Transponderchip übertragen werden können, zum Beispiel durch Infrarot, NFC (Near Field Communication) oder durch eine kontaktbehaftete Schnittstelle. Während das in das Trägermaterial montierte Transponderchipmodul über die Schlitzantenne mit externen Geräten kommunizieren kann, kann es über die weitere Kommunikationsschnittstelle mit internen Komponenten, beispielsweise Komponenten innerhalb eines Fahrzeugs wie der Motorelektronik, kommunizieren. Dabei kann der Chip auch als Speicher für sichere Informationen, wie zum Beispiel kryptographische Schlüssel, eingesetzt werden, also als Sicherheitsmodul für Kraftfahrzeuge dienen.

Über eine solche weitere Schnittstelle kann der Transponderchip auch bei Bedarf von extern, also z.B. vom Bordnetz eines Fahrzeugs, mit Energie gespeist werden. Eine Batterie ist in diesem Falle nicht notwendig oder kann zum Beispiel durch das Bordnetz aufgeladen werden. Für die Datenübertragung des Transponderchips über die Schlitzantenne kann der Transponderchip dann entweder zusätzlich mit Energie aus der Batterie oder dem Bordnetz gespeist werden oder, dann bei verringerter Lesereichweite, durch das Feld des Lesegeräts mit Energie versorgt werden.

Nachfolgend wird die Erfindung beispielhaft anhand der begleitenden Zeichnungen erläutert. Darin zeigen:
- Figur 1: eine schematische Querschnittsansicht eines Transponders mit einem Transponderchipmodul und einer Schlitzantenne,
- Figur 2: eine Unteransicht des in Figur 1 dargestellten Transponderchipmoduls,
- Figur 3: eine Draufsicht einer Schlitzantenne mit einem in einen zugehörigen Schlitz eingesetzten erfindungsgemäßen Transponderchipmodul,
- Figur 4: eine schematische Querschnittsansicht und Rückansicht eines Transponders mit einem Transponderchipmodul, ähnlich Figur 1 jedoch in kapazitiver Ausführung, und einer Schlitzantenne gemäß einer Ausführungsform der Erfindung,
- Figur 5: drei Varianten einer Schlitzantenne mit verbreitertem Antennenschlitz am Einspeisepunkt,
- Figur 6: vier verschiedene Ausführungsformen erfindungsgemäßer Transponderchipmodule, von denen drei an die Antennenschlitzverbreiterungen gemäß Figur 5 angepaßt sind,
- Figur 7: vier unterschiedliche Varianten zur Klemmfixierung eines erfindungsgemäßen Transponderchipmoduls in einem Antennenschlitz,
- Figur 8: eine weitere Variante zur Fixierung eines erfindungsgemäßen Transponderchipmoduls in einem Antennenschlitz,
- Figur 9: ein Transponderchipmodul mit metallischem Rahmen,
- Figur 10: ein als Boxed-In-Antenne ausgeführtes Transponderchipmodul,
- Figur 11: das Transponderchipmodul aus Figur 10 gefüllt mit dielektrischem Material,
- Figur 12: Schritte zur Herstellung eines Transponderchipmoduls mit integrierter Boxed-In-Antenne als metallisierter Quader,
- Figur 13: die Montage des Transponderchipmoduls aus Figur 11 in ein Trägermaterial,
- Figur 14: das Transponderchipmodul aus Figur 12 mit ergänzender Komponente perspektivisch und schematisch in Draufsicht,
- Figur 15: einen erfindungsgemäßen Transponder mit Boxed-In-Antenne, die in einem Vollmaterial als Vertiefung ausgebildet ist,
- Figur 16: den Transponder aus Figur 15, jedoch mit prismenartig ausgebildeter Boxed-In-Antenne,
- Figur 23: eine Querschnittsansicht eines Transponders mit einer Schlitzantenne gemäß einer Weiterbildung der Erfindung,
- Figur 24: eine Unteransicht des in Figur 23 dargestellten Transponderchipmoduls,
- Figur 25: den Transponder aus Figur 23, jedoch mit kapazitiver Kopplung,
- Figur 26: eine Querschnittsansicht eines Transponders mit einer Schlitzantenne gemäß einer Weiterbildung der Erfindung,
- Figur 27: eine Unteransicht des in Figur 26 dargestellten Transponderchipmoduls,
- Figur 28: den Transponder aus Figur 26, jedoch mit kapazitiver Kopplung,
- Figur 29: eine Querschnittsansicht eines Transponders mit einer gefalteten Schlitzantenne,
- Figur 30: eine Draufsicht des in Figur 29 dargestellten Transponders mit gefalteter Schlitzantenne,
- Figur 31: eine Querschnittsansicht eines Transponders mit einer modifizierten gefalteten Schlitzantenne,
- Figur 32: eine Draufsicht des in Figur 31 dargestellten Transponders mit gefalteter Schlitzantenne,
- Figur 33: eine Querschnittsansicht eines weiteren Transponders mit einer gefalteten Schlitzantenne, und
- Figur 34: eine Draufsicht des in Figur 33 dargestellten Transponders mit gefalteter Schlitzantenne.

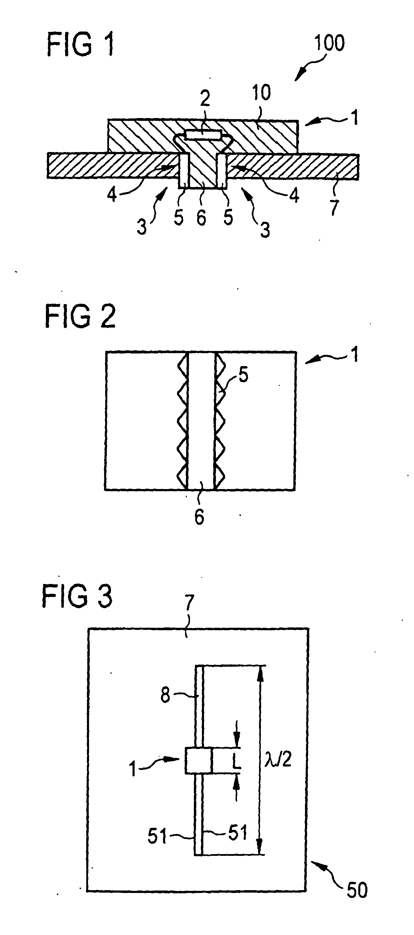

In den Figuren 1 und 2 ist schematisch ein erfindungsgemäßer Transponder gemäß einer ersten Ausführungsform mit einer Schlitzantenne dargestellt. Die Abmessungen und die dargestellten Verhältnisse sind zum Zwecke der besseren Anschaulichkeit nicht realistisch wiedergegeben.

Das Transponderchipmodul 1 weist einen Transponderchip 2 und Kontaktstellen 3 auf, welche elektrisch mit dem Transponderchip verbunden sind. Der Transponderchip 2 ist in einer Formmasse 10 eingebettet, welche bei dieser Ausführungsform ein T-förmiges Formteil bildet. Dieses T-förmige Transponderchipmodul 1 besitzt am vertikalen T-Schenkel 6 zwei Kontaktstellen 3, die an voneinander wegweisenden Oberflächen 4 des Transponderchipmoduls 1 angeordnet sind. Bei der in Figur 1 dargestellten Ausführungsform sind diese Oberflächen 4 parallel zueinander angeordnet. Die Kontaktstellen greifen direkt in einen Schlitz 8 ein, der im Trägermaterial 7 vorgesehen ist. Dabei kommen die Kontaktstellen 3 mit den Innenseiten des Schlitzes 8 in Berührung, so dass ein galvanischer Kontakt zum Trägermaterial gegeben ist. Die Kontaktstellen können auch V-förmig, konvex, konkav oder in anderer Form ausgebildet sein, wenn dies aufgrund der Form des Schlitzes 8 zweckmäßig ist.

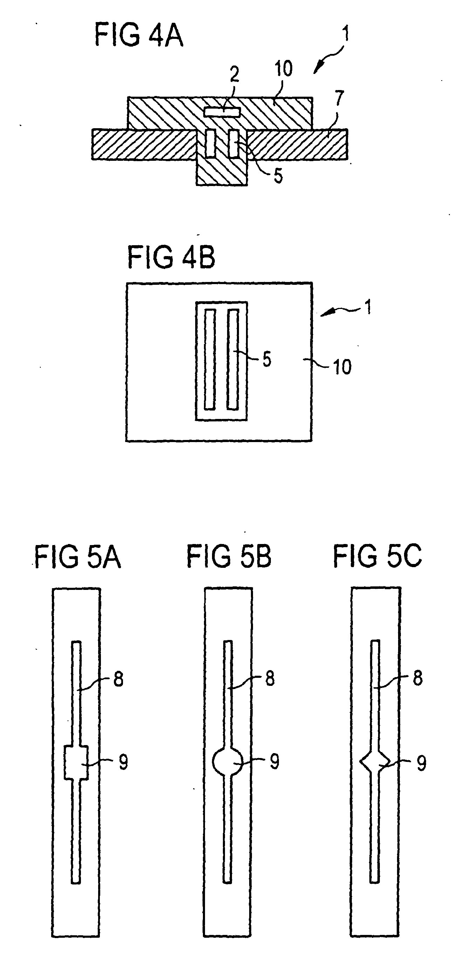

Die Figuren 4A und 4B zeigen einen erfindungsgemäßen Transponder mit einem erfindungsgemäßen Transponderchipmodul 1 einmal schematisch im Querschnitt und einmal als Ansicht von unten. Das Transponderchipmodul 1 unterscheidet sich von demjenigen aus Figur 1 dadurch, dass die Kontaktstellen 3 nicht als galvanische Kontaktverbindung sondern zur kapazitiven Kopplung mit den Seitenwänden des in dem Trägermaterial 7 vorgesehenen Schlitzes ausgebildet sind. Diese Variante beruht auf dem Grundprinzip, dass ein hochfrequenter Strom ungehindert fließen kann, wenn zwischen den Anschlüssen 5 des Transponderchips 2 und der Schlitzantenne genügend große Kapazitäten eingefügt werden. Eine kapazitive Kopplung gegenüber einer galvanischen Kontaktierung der Antenne bietet den besonderen Vorteil, dass eine eventuell auf der Antennenstruktur vorhandene Korrosionsschutzschicht nicht mehr beschädigt wird. Desweiteren kann auf einen Kondensator zur Gleichstromblockung verzichtet werden, da dieser durch die beiden Kapazitäten an den Koppelflächen ersetzt wird.

Zu berücksichtigen ist, dass die Kapazität der Koppelflächen umso kritischer ist, je genauer die Anpassung des Transponderchipmoduls an die Antennenstruktur ist. Das heißt, je besser die Anpassung von vornherein ist, umso größer muß die Kapazität der Koppelflächen sein. Bei einer sehr guten Anpassung zum Beispiel mit einem VSWR von 1,5 sollten die beiden Koppelkapazitäten jeweils mindestens etwa 2 pF betragen, um keine große Auswirkung zu haben. Wenn als Koppelflächen nur die senkrechten Blechkanten der Innenseite des Schlitzes wirken, so ergibt sich bei einer Blechdicke von 1 mm, einer lateralen Ausdehnung der Koppelfläche von 10 mm und einer Dicke des zwischenliegenden Dielektrikums von jeweils 100 µm eine Kapazität von 1,8 pF pro Koppelfläche. Das bedeutet zum Beispiel bei der genannten Anpassung auf VSWR = 1,5 eine Reduktion auf VSWR = 2,2 und damit eine Reduktion der Reichweite um lediglich etwa 5 %. Diese Verschlechterung ist vernachlässigbar gegenüber dem Vorteil, dass auf den bisher notwendigen Kondensator zur Gleichstrom-Blockung verzichtet werden kann und ein etwaiger Korrosionsschutz auf der Antennenstruktur nicht beschädigt wird.

Da der Antennenschlitz typischerweise einen Breite von 1 bis 2 mm hat, ist es schwierig, den zentralen Steg des T-förmigen Transponderchipmoduls so zu gestalten, dass er einerseits die elektrischen Anschlüsse aufweist und andererseits ausreichend Klemmkraft besitzt, um nicht aus dem Schlitz herauszurutschen. In den Figuren 5A bis 5C sind daher Schlitzgeometrien gezeigt, bei denen der Schlitz in der Umgebung der Einspeisestelle verbreitert ist. Die Verbreiterung erstreckt sich in Längsrichtung des Antennenschlitzes nur über einen geringen Bruchteil des Schlitzes. Dadurch wirkt sich die Verbreiterung auf die elektrischen Eigenschaften weitaus geringer aus, als wenn der Schlitz über seine gesamte Länge verbreitert wäre. Durch die Verbreiterung kann das Einpressen des zentralen Steges bei geeigneter Ausgestaltung mit größeren Toleranzen erfolgen. Der verbleibende Teil der Schlitzöffnung kann in einfacher Weise durch Einspritzen einer Dichtmasse versiegelt werden. Von besonderer Bedeutung ist die Verbreiterung des Schlitzes am Einspeisepunkt auch zur automatischen Zentrierung des Transponderchipmoduls beim Einsetzen des Moduls in den Schlitz. Diese Funktion der automatischen Zentrierung kann durch eine beliebige Veränderung der Schlitzbreite realisiert werden, beispielsweise auch durch eine Verengung des Schlitzes.

Figur 5A zeigt eine rechteckförmige Verbreiterung des Schlitzes 8 am Einspeisepunkt mit paralleler Ausrichtung der Längskanten in Schlitzrichtung. Dementsprechend breit kann der zentrale Steg des Transponderchipmoduls 1 ausgebildet sein. Dies ermöglicht es, die Kontakt- oder Koppelflächen 5 weiter auseinander zu setzen und erhöht des weiteren die mechanische Stabilität des Moduls. Als Sonderfall des rechteckigen Querschnitts kann der Querschnitt des zentralen Stegs auch quadratisch gestaltet sein. In diesem Falle empfiehlt es sich, ihn mit ein oder zwei Nasen zu versehen, die in den nicht verbreiterten Bereich des Schlitzes 8 hineinragen, um das Chipmodul gegen den Fehlerfall einer um 90° verdrehten Montage zu sichern.

Figur 5B zeigt eine kreisförmige Verbreiterung 9 des Schlitzes 8 am Einspeisepunkt, wodurch dieselben Vorteile erzielt werden, wie sie zuvor erläutert wurden. Auch hier empfiehlt es sich, den Steg des Transponderchipmoduls mit ein oder zwei Nasen zu versehen, welche in den nicht verbreiterten Bereich des Schlitzes 8 hineinragen, um das Modul gegen den Fehlerfall einer verdrehten Montage zu sichern.

Figur 5C zeigt eine weitere Variante, bei der die Verbreiterung 9 des Schlitzes 8 am Einspeisepunkt rautenförmig gestaltet ist. Im Falle einer quadratischen Raute empfiehlt es sich wieder, den Steg des Transponderchipmoduls mit ein oder zwei Nasen zu versehen, um das Modul gegen den Fehlerfall einer verdrehten Montage zu sichern.

Natürlich können auch andere Querschnitte für den Steg gewählt werden, zum Beispiel sternförmig oder auch fraktal-ähnlich. Auch Mischformen sind möglich, zum Beispiel rechteckförmig mit gerundetem Übergang zum Schlitz. Desweiteren ist es möglich, den Schlitz außenseitig anzuphasen, um den Steg leichter in den Schlitz einpressen zu können.

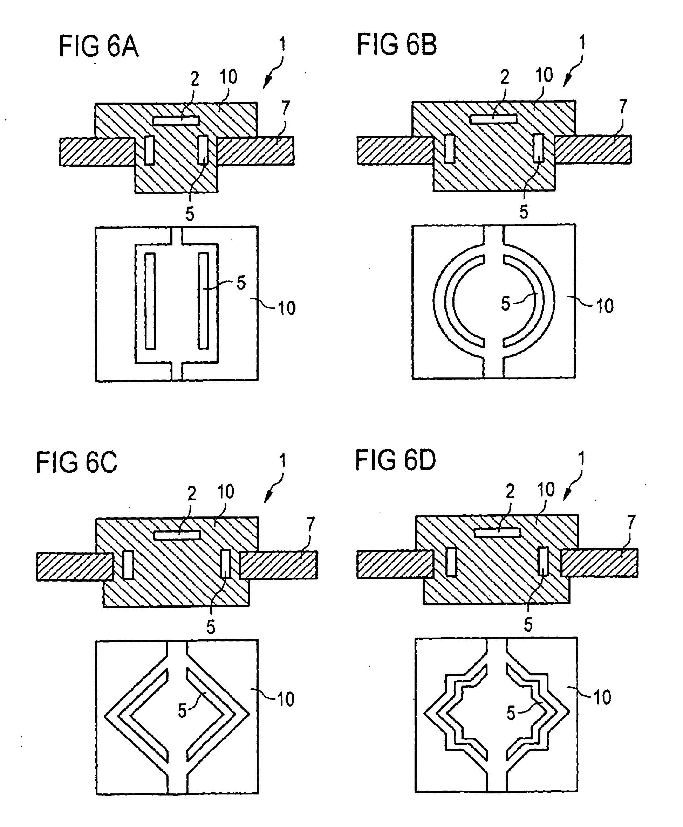

Die Figuren 6A bis 6C zeigen jeweils schematisch im Querschnitt und in Aufsicht zu jeder der Verbreiterungen 9 in den Figuren 5A und 5B ein erfindungsgemäßes Transponderchipmodul 1, bei dem die Außenkontur des zentralen Stegs an die Kontur der Verbreiterung 9 jeweils entsprechend angepasst ist. Auch die Chipanschlüsse 5 sind entsprechend angepasst und verlaufen dementsprechend je nach Fall geradlinig, gebogen oder gewinkelt. Figur 6D zeigt ein Transponderchipmodul mit einem zentralen Steg, der entsprechend einer der vorbeschriebenen Mischformen einen aus einem Quadrat und einer quadratischen Raute sternförmig gebildeten Querschnitt besitzt. Die Chipanschlüsse 5 in den Figuren 6A bis 6D sind als Koppelstellen für die kapazitive Kopplung ausgebildet. Genauso gut können auch galvanische Kontaktanschlüsse vorgesehen werden.

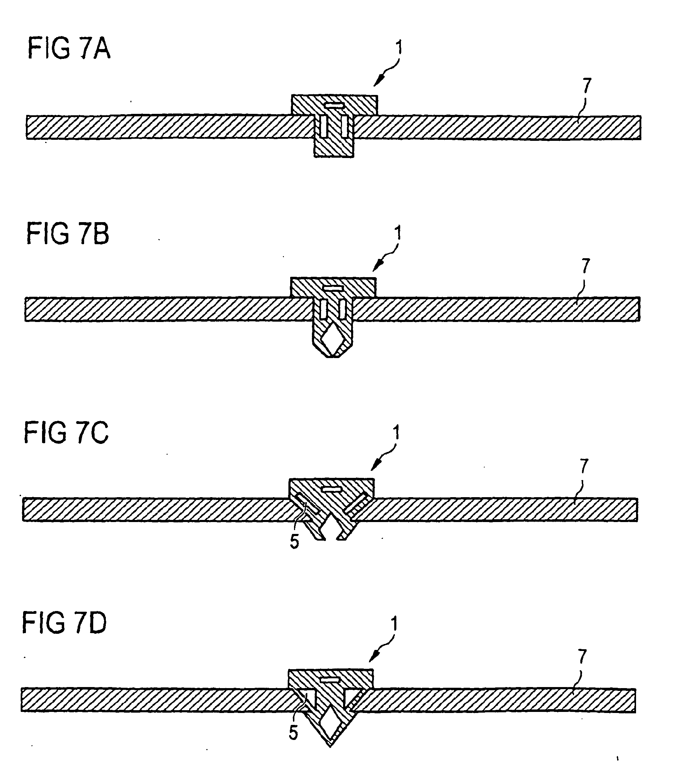

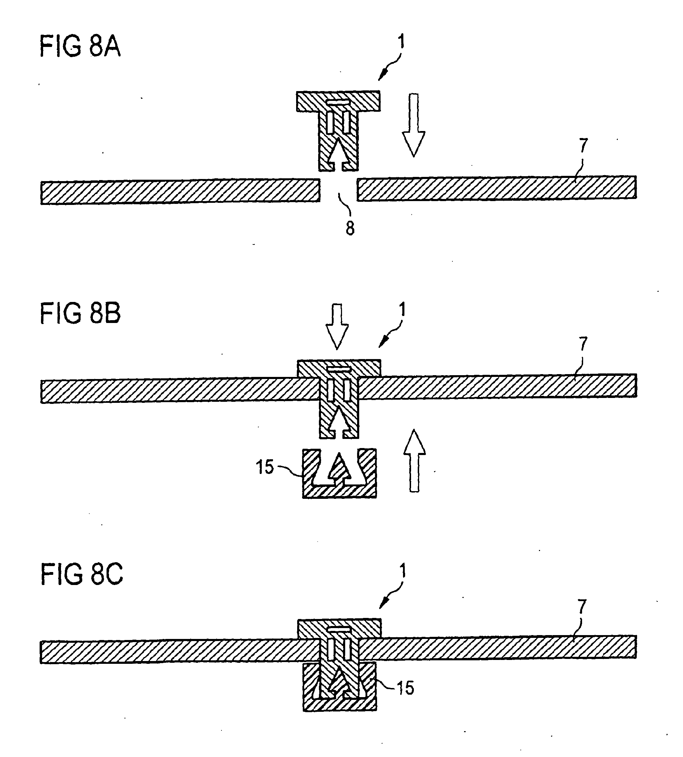

Der horizontale T-Schenkel des T-förmigen Transponderchipmoduls 1 der Figuren 1, 4 und 6 liegt an der Oberfläche des Trägermaterials 7 an, so dass eine sichere Position des Transponderchipmoduls 1 im Schlitz 8 erreicht wird. Am vertikalen T-Schenkel des Transponderchipmoduls 1 ist ein Kontaktmaterial 5 vorgesehen, welches eine Kontaktstelle 3 bildet, um die Innenseite des Trägermaterials 7 kontaktieren zu können. Die Kontaktstelle kann als Klemmvorrichtung, Schneidklemmvorrichtung oder Klippvorrichtung ausgebildet sein, so dass das Transponderchipmodul 1 in den Schlitz 8 einfach einsetzbar ist, ohne dabei eine aufwendige Justage des Moduls 1 zu erfordern. Das Trägermaterial kann bereits selbst eine Klemmvorrichtung, Schneidklemmvorrichtung oder Klippvorrichtung aufweisen, so dass sich eine eventuell aufwendig herzustellende derartige Klemmvorrichtung am Transponderchipmodul 1 einsparen läßt. Ist das Trägermaterial 7 zum Beispiel ein einfach umformbares Blechteil, läßt sich dadurch eventuell eine kostengünstige Konstruktion erzielen. Weitere Varianten werden nachfolgend anhand der Figuren 7A bis 7D und 8A bis 8C beschrieben.

Figur 7A zeigt nochmals das im wesentlichen T-förmige Transponderchipmodul 1, welches mit einem geradlinig ausgebildeten zentralen Steg in einen dazu korrespondierenden Schlitz eines Trägermaterials 7 eingepaßt ist und beispielsweise allein über Klemmkräfte darin gehalten wird.

Figuren 7B bis 7D zeigen dazu abgewandelte Ausführungsbeispiele mit Schnappverbindungen. Beim Einstecken des Transponderchipmoduls 1 in den Schlitz des Trägermaterials 7 verrastet die Schnappverbindung am Schlitzaustritt mit der Rückseite des Trägermaterials 7. Dazu ist der zentrale Steg des Transponderchipmoduls 1 entsprechend flexibel ausgebildet. In den Figuren 7C und 7D liegen die Seitenflächen des Schlitzes nicht parallel einander gegenüber sondern sind geneigt, im Ausführungsbeispiel um etwa 45 Grad. Die Chipanschlüsse 5 zur kapazitiven Kopplung (oder alternativ die galvanischen Kontaktanschlüsse) des Transponderchipmoduls 1 verlaufen entsprechend parallel zu diesen geneigten Flächen.

Figuren 8A bis 8C zeigen eine Variante, bei der der zentrale Steg des Transponderchipmoduls 1 nach dem Einsetzen im Schlitz 8 des Trägermaterials 7 von der gegenüberliegenden Seite des Trägermaterials 7 mittels einer Plombe 15 gegen ein Herausrutschen aus dem Trägermaterial 7 gesichert wird.

Vorzugsweise sind in dem Transponderchipmodul 1 Anpassungsmittel wie z.B. Spulen, Kondensatoren, Anpassungsleitungen, Ferritperlen etc. untergebracht, so dass eine Eingangsimpedanz der Schlitzantenne an eine Eingangsimpedanz des Transponderchips 2 angepaßt werden kann. Eine solche Maßnahme ist sinnvoll, da die Eingangsimpendanz der Schlitzantenne bei einer Einspeisung in der Mitte, siehe Figur 3, üblicherweise bei ≥ 485 Ω liegt, während die Eingangsimpedanz eines Transponderchips in der Regel eine komplexe Eingangsimpedanz von einigen wenigen Ω bildet. Durch die Anpassungsmittel können somit Performanceverluste verringert werden. Da eine Verbreiterung des Schlitzes 8 eine Erhöhung der Eingangsimpedanz der Schlitzantenne bewirkt, sollte der Schlitz bevorzugt so schmal wie möglich ausgestaltet sein.

Bei einer außermittigen Einspeisung (Versatz des Transponderchips in Richtung zu einem Ende des Schlitzes 8) sinkt die Impedanz am gewählten Einspeisepunkt der Schlitzantenne und kann so an die Chipimpedanz angepaßt werden. So beträgt die Eingangsimpedanz bei einem Einspeisepunkt in einer Entfernung von λ/20 (also 1/10 der Schlitzlänge) vom Schlitzende nur etwa 50 Ω. Der optimale Einspeisepunkt für eine Chipimpedanz von einigen wenigen Ω ist also noch etwas näher am Ende des Schlitzes.

Um im Falle eines Schlitzes, der die in Bezug auf Figuren 5 und 6 beschriebene Schlitzbreitenveränderung nicht aufweist, eine einfache, schnelle und damit kostengünstige Montage des oben beschriebenen Transponderchipmoduls im Schlitz 8 ohne aufwendige Justage zu erreichen, ist es zweckmäßig, wenn das Transponderchipmodul bis zu einem Ende des Schlitzes 8 reicht. Wird das Transponderchipmodul 1 am Schlitzende eingepresst, ergibt sich somit automatisch eine Einspeisung am Punkt der richtigen Impedanz. Das Schlitzende übernimmt somit die Funktion eines Anschlagsmechanismus. Ist das Transponderchipmodul zusätzlich mit einer Markierung versehen, kann eine optische Identifizierung des Transponderchipmoduls 1 bei einem Ausfall des Transponderchips 2 oder eines zugehörigen Lesegerätes erzielt werden. Bei der Markierung kann es sich zum Beispiel um eine Seriennummer handeln, die durch Einätzen auf der Transponderchipmoduloberseite oder durch Einstempeln erreicht wird.

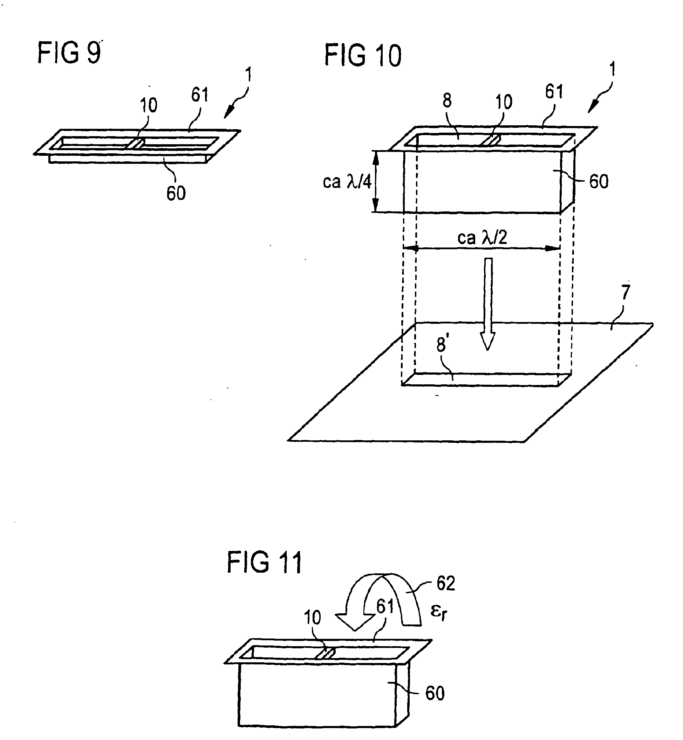

Figur 9 zeigt ein Transponderchipmodul 1, welches nicht von den Ansprüchen gedecht ist. In diesem Falle umfasst das Transponderchipmodul 1 bereits einen Teil der Schlitzantenne des Transponderchips, nämlich den Schlitz als solchen. Konkret ist ein in einer Vergussmasse vergossener Chip 10 in einem vorkonfektionierten Rahmen 60 aus elektrisch leitfähigem Material, insbesondere einem metallischen Rahmen, eingesetzt. Die Breiten und Längenabmessungen des Rahmens 60 sind so gewählt, dass der Rahmen selbst die Funktion des Schlitzes der Schlitzantenne übernimmt. Dementsprechend ist der Vergussblock 10 so dimensioniert und in den Rahmen 60 eingesetzt, dass gegenüberliegende Seiten des Chipmoduls 10, an denen galvanische oder kapazitive Chipanschlüsse vorgesehen sind, an den gewünschten Einspeisepunkten des Rahmens 60 liegen. Der besondere Vorteil dieser Lösung besteht darin, dass der Transponderchip am Rahmen 60 befestigt werden kann, noch bevor der Rahmen 60 in eine entsprechende Ausnehmung des Trägermaterials eingesetzt wird. Dies erlaubt die sichere Befestigung des Chipmoduls 10 in einer vom späteren Einbauobjekt getrennten Fertigungsumgebung und ermöglicht damit die Auswahl eines optimalen Kontaktierverfahrens zwischen dem Chipmodul 10 und dem Rahmen 60.

Der Rahmen 60 besitzt hier einen Kragen 61, der beim Einsetzen des Transponderchipmoduls 1 in eine entsprechende Aussparung des Trägermaterials seitlich zu der Aussparung auf dem Trägermaterial aufsitzt.

Vorzugsweise wird der durch den Rahmen 60 gebildete Schlitz vollständig mit dielektrischem Material verschlossen. Durch den Einfluss des Dielektrikums wird die Wellenlänge einer elektromagnetischen Welle bei konstanter Frequenz verkürzt, wodurch auch die mechanischen Abmessungen des Rahmens verringert werden können, wobei dieser Effekt mit steigender Dielektrizitätskonstante zunimmt. Außerdem wird der Schlitz dadurch gegen Eindringen von Staub und Feuchtigkeit abgedichtet.

Figur 10 zeigt ein erfindungsgemäßes Transponderchipmodul, bei dem der Rahmen 60 eine Boxed-In-Schlitzantenne bildet. Der Rahmen 60 ist auf der dem Schlitz 8 gegenüberliegenden Seite geschlossen und hat eine Tiefe von etwa λ/4.

In Figur 10 ist ergänzend zu Figur 9 das Einsetzen des Transponderchipmoduls 1 in eine entsprechend ausgebildete Aussparung 8' des Trägermaterials 7 in Pfeilrichtung angedeutet. Der Kragen 61 wird mit der Oberfläche des Trägermaterials 7 elektrisch leitend verbunden. Dabei kann jedes geeignete Kontaktierverfahren zum Einsatz gelangen, beispielsweise Löten, Leitkleben und dergleichen. Auch eine kapazitive Kopplung zwischen dem Kragen 61 und dem Trägermaterial 7 ist möglich. Dies gilt in gleichem Maße für das Ausführungsbeispiel nach Figur 9.

Auch die Boxed-In-Antenne kann aus den vorgenannten Gründen bevorzugt mit einem Dielektrikum gefüllt werden, um die Abmessungen zu reduzieren. Figur 11 zeigt schematisch, wie die kastenartig ausgebildete Boxed-In-Antenne mit einem Dielektrikum 62 mit Dielektrizitätskonstante εᵣ gefüllt wird.

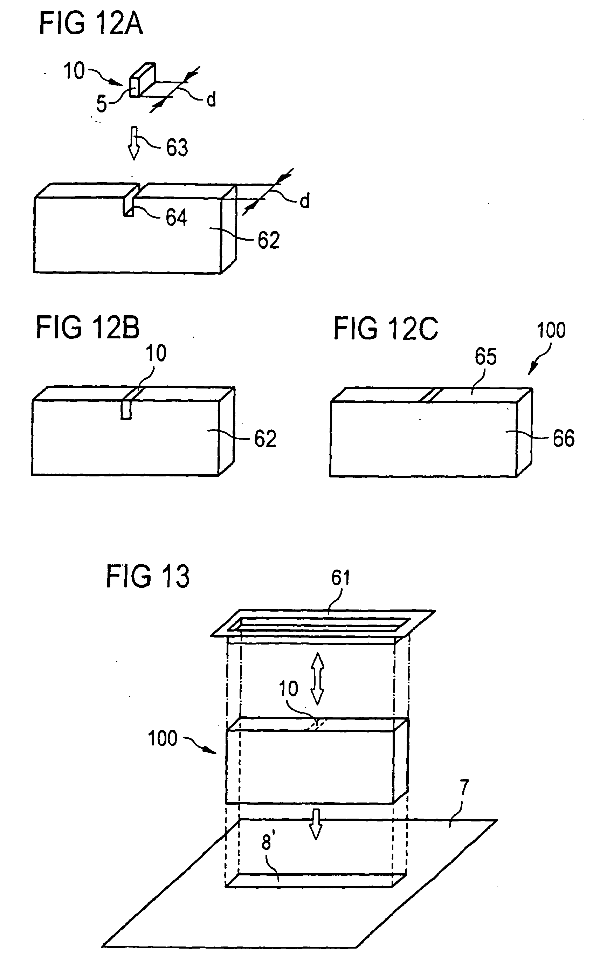

Anhand der Figuren 12A bis 12C wird nachfolgend ein Verfahren zur Herstellung einer zu den Figuren 10 und 11 alternativen Boxed-In-Antenne mit integriertem Transponderchipmoduls für einen Transponder erläutert. Zunächst wird ein quaderförmiger Block aus dielektrischem Material 62 hergestellt, der eine Breite d besitzt, die der gewünschten Schlitzbreite entspricht. Der Quader kann beispielsweise aus Kunststoff, Keramik oder einem anderen dielektrischen Material bestehen. In eine der beiden längeren Schmalseiten wird anschließend eine Nut 64 eingebracht, in die ein Chipmodul 10 eingesetzt wird (Pfeil 63), das an seinen beiden Stirnflächen elektrische Kontaktflächen 5 ausbildet. Das heißt, die Stirnflächen sind metallisiert und mit einem in dem Modul 10 eingebetteten Transponderchip elektrisch leitend verbunden. Alternativ können auch kapazitive Koppelelemente vorgesehen sein. Das Chipmodul 10 weist zwischen den beiden Stirnflächen den Abstand d entsprechend der gewünschten Schlitzbreite auf. Insgesamt entsprechen die Abmessungen der Nut 64 in Länge, Höhe und Breite in etwa den Abmessungen des Chipmoduls 10.

Figur 12B zeigt den Quader 62 mit in der Nut 64 eingesetztem Chipmodul 10, welches in der Nut 64 beispielsweise durch Kleben fixiert ist. Anschließend werden fünf der insgesamt sechs Seiten des Quaders mit einer elektrisch leitenden Oberfläche 66, zum Beispiel einer Metallbeschichtung, überzogen. Die später den Schlitz ausbildende Schmalseite 65 wird nicht metallisiert oder eine etwaige Metallisierung wird in einem anschließenden Schritt wieder entfernt, beispielsweise durch Abfräsen, Abstanzen oder Ätzen. Ein derartiges Transponderchipmodul 100 kann dann in derselben Weise in eine Aussparung 8' eines Trägermaterials 7 eingesetzt werden, wie dies in Bezug auf Figur 10 erläutert wurde, insbesondere unter Verwendung eines zusätzlichen Kragens 61, wie in Figur 13 gezeigt ist.

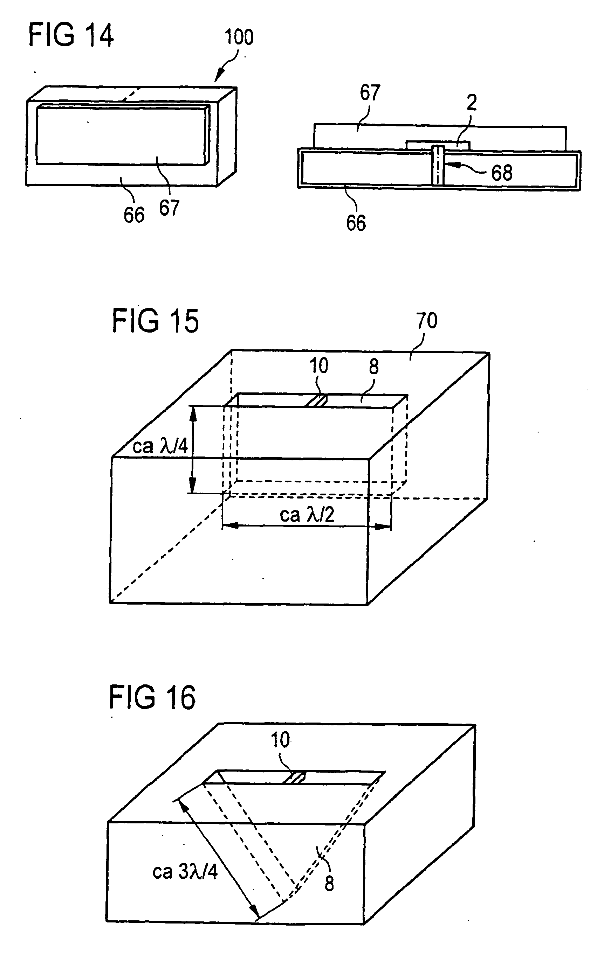

Figur 14 zeigt eine Weiterbildung des vorbeschriebenen, durch einen metallisierten Quader gebildeten Transponderchipmoduls 100 in perspektivischer Ansicht sowie in schematischer Draufsicht. An der Außenseite der Metallisierung 66 ist eine zusätzliche Komponente 67 angebracht. Dabei handelt es sich bevorzugt um eine elektrische oder elektronische Komponente, wie zum Beispiel eine Batterie zur Spannungsversorgung des Transponderchips 2, Halbleiterbauelemente (der Transponderchip selbst, Mikroprozessor, HF-Interface, und dergleichen), Anzeigeelemente (LED, Display), passive Bauelemente und gegebenenfalls eine Leiterplatte zur Aufnahme der Komponenten.

Im dargestellten Ausführungsbeispiel handelt es sich bei der zusätzlichen Komponente 67 um eine Leiterplatte, die auch den Transponderchip 2 umfasst, der wiederum über eine Speiseleitung 68, beispielsweise eine Koaxialleitung oder eine Semi-Rigid-Leitung, mit den Einspeisepunkten der Schlitzantenne verbunden ist.

Die zusätzliche Komponente 67 kann auch eine weitere Schnittstelle zur Übertragung von Daten und/ oder Energie zum Transponderchip umfassen, wie dies eingangs bereits erläutert wurde. So könnte der Transponderchip beispielsweise als Speicher für sichere Informationen, wie zum Beispiel kryptographische Schlüssel, eingesetzt werden und somit ein Sicherheitsmodul in einem Kraftfahrzeug bilden, welches über die weitere Kommunikationsschnittstelle mit der Motorelektronik kommuniziert. Auch eine Verbindung zum Bordnetz zur Speisung des Chips mit Energie kann über eine solche Schnittstelle hergestellt werden.

Figur 15 zeigt eine Alternative zu den beiden vorbeschriebenen Boxed-In-Schlitzantennen. In diesem Falle ist die den Schlitz 8 bildende kastenförmige Vertiefung integraler Bestandteil eines massiven elektrisch leitfähigen Materials 70, beispielsweise eine in einen Motorblock oder dergleichen eingefrästen Vertiefung. Die Abmessungen dieser Vertiefung und die Anordnung des Chipmoduls 10 im Schlitz 8 sind dagegen unverändert. Auch in diesem Falle kann der Schlitz 8 mit dielektrischem Material gefüllt sein, um die Abmessungen zu reduzieren.

Figur 16 zeigt eine Variante der Boxed-In-Antenne aus Figur 15. Anstelle einer quaderförmigen Vertiefung ist der Schlitz 8 als prismenförmige Vertiefung ausgebildet. Während die Länge des Schlitzes nach wie vor etwa λ/2 beträgt, wird die Seitenlänge der sich in das Material erstreckenden Schmalseiten der prismenförmigen Vertiefung zu etwa 3λ/4 gewählt. Auch dieser Schlitz 8 kann aus den vorgenannten Gründen mit dielektrischem Material gefüllt werden und ist dann entsprechend kleiner. Die Boxed-In-Antenne gemäß Figuren 10 bis 14 können ebenfalls prismenförmig ausgebildet sein.

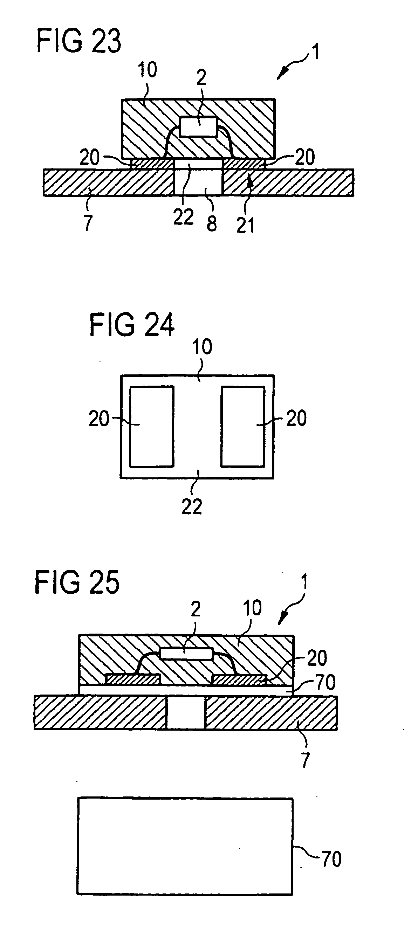

In den Figuren 23 und 24 ist eine Weiterbildung eines Transponderchipmoduls 1 dargestellt. Der Transponderchip 2 ist dabei durch ein Kontaktmaterial 20 mit dem Trägermaterial 7 der Schlitzantenne kontaktiert. Um eine elektrische Verbindung mit den Einspeisepunkten der Schlitzantenne zu erreichen, kann zum Beispiel ein elektrisch leitfähiges Klebematerial als Kontaktmaterial 20 verwendet werden. Das Kontaktmaterial kann derart ausgestaltet sein, dass es mit einem Klebemittel versehen ist, welches nur in einer Richtung (z-Achse) leitfähig ist. Ein solches Klebemittel ist vorteilhaft, da auch bei vollflächiger Verteilung des Klebemittels kein Kurzschluß zwischen den Einspeisepunkten der Schlitzantenne entsteht. Eine andere Möglichkeit besteht im (Reflow-)Löten, wobei auf die Kontaktstellen 21 zu einem vorhergehenden Zeitpunkt eine Lötpaste aufgebracht werden muß, welche durch eine Erwärmung der Einspeisepunkte auf dem Trägermaterial 7 die Lötung zwischen dem Transponderchipmodul 1 und dem Trägermaterial 7 bewirkt. Figur 25 zeigt wiederum schematisch im Querschnitt sowie als Ansicht von unten ein entsprechendes Ausführungsbeispiel, bei dem das Kontaktmaterial nicht als galvanische Kontaktstelle sondern als kapazitive Koppelstelle ausgebildet ist. Dazu wird das Kontaktmaterial 12 wieder durch eine isolierende Schicht 70, zum Beispiel eine isolierende Klebefolie, vom Trägermaterial 7 getrennt, analog zu der Ausführungsform gemäß Figur 19.

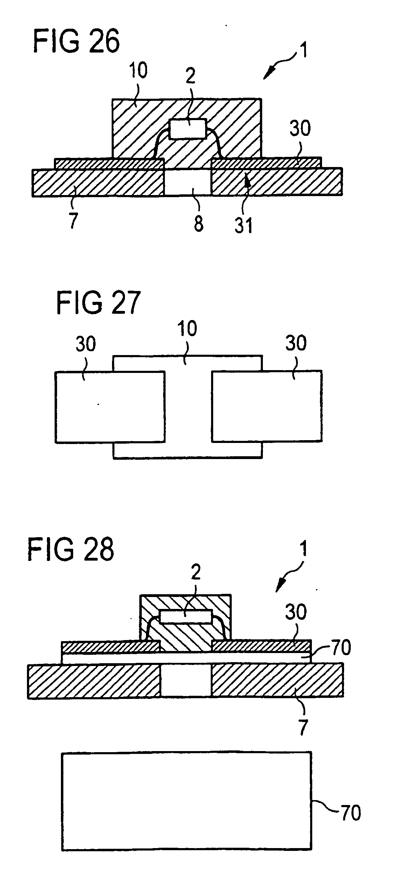

Bei den in den Figuren 23 bis 25 dargestellten Ausführungsformen sind die Kontaktstellen 31 vollständig unterhalb der Formmasse 10 vorgesehen. Bei der in Figur 26 und 27 dargestellten Ausführungsform ragt das entsprechende Kontaktmaterial 30 über die Außenabmessungen der Formmasse 10 hinaus. Dadurch ist es möglich, dass zusätzlich zu der bei Figur 23 und 24 erwähnten Klebeverbindung oder Lötverbindung andere Kontaktierverfahren zum Einsatz kommen. Diese können zum Beispiel Punktschweißen, Hartlöten (z.B. mit einer punktförmigen Wasserstoffflamme), Schweißen mittels eines Infrarotlasers, Ultraschalllöten oder ähnliches sein, bei denen eine zur Verbindung führende Energie punktförmig bzw. ausreichend räumlich begrenzt eingebracht wird. Ebenso ist es möglich, bei der in Figur 26 und 27 dargestellten Ausführungsform eines Transponderchipmoduls das Kontaktmaterial 30 mit dem Trägermaterial 7 durch eine Schraub- oder Nietverbindung zu befestigen. Figur 28 zeigt wieder eine entsprechende Ausführungsvariante mit kapazitiver Kopplung, analog zu den Ausführungsbeispielen gemäß Figuren 19 und 25, wobei das Kontaktmaterial 30 wiederum als kapazitives Koppelelement ausgebildet ist, das durch eine dielektrische Schicht 70 vom elektrisch leitfähigen Trägermaterial 70 getrennt ist.

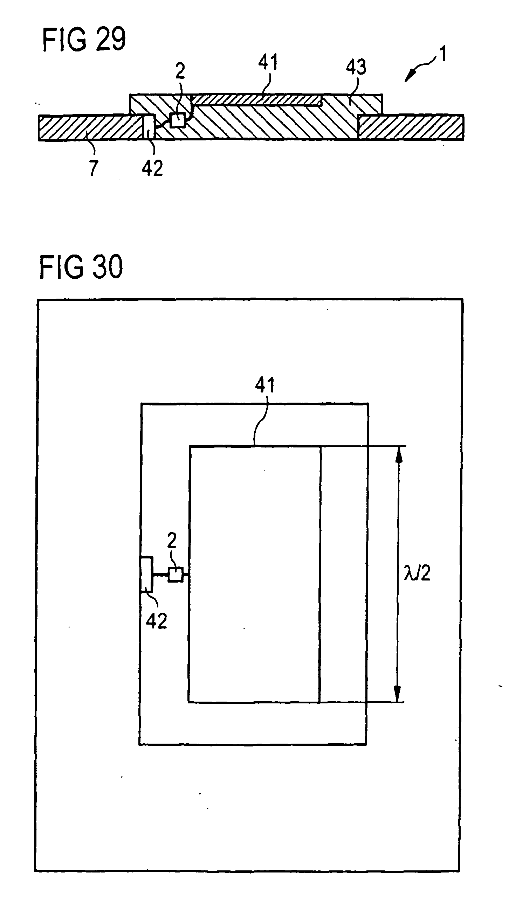

Um die Eingangsimpedanz einer Schlitzantenne zu verringern, kann eine gefaltete Schlitzantenne vorgesehen sein, siehe Figuren 29 und 30. Durch eine derartige, nicht mehr lineare sondern gefaltete Schlitzantenne wird eine um den Faktor 4 geringere Eingangsimpedanz erreicht. In Figur 29 ist eine Querschnittsansicht eines Transponderchipmoduls 1 dargestellt, welches einen Transponderchip 2 aufweist, der mit einem Anschluß mit dem Kontakt 42 und mit dem anderen Anschluß mit einem Metallblech 41 kontaktiert ist. Durch den Kontakt 42 wird eine Verbindung zu dem die gefaltete Schlitzantenne umgebenden Trägermaterial 7 erreicht. Das Trägermaterial 7 läßt sich mechanisch dadurch stabilisieren, dass der Schlitz zum Beispiel mit einem Dielektrikum 43 ausgefüllt wird. Es ist zweckmäßig, das Dielektrikum als ein Einpressteil auszubilden, welches in die Aussparung des Trägermaterials 7 eingepresst werden kann. Das Dielektrikum 43 umgibt somit den Transponderchip 2, das Metallblech 41 und den Kontakt 42, der eine Verbindung zum Trägermaterial 7 herstellt.

Das Metallblech 41 ist in der Ausführungsform gemäß Fig. 29 an der Oberseite des Dielektrikum 43 angeordnet, kann aber alternativ auch - beispielsweise mittig - im Dielektrikum 43 oder an dessen Unterseite angeordnet sein.

Werden in dem als Dielektrikum wirkenden Einrastteil 43 statt eines einzigen Metallbleches 41 mehrere, zum Beispiel n Metallbleche parallel zueinander angeordnet, läßt sich in Analogie zum Doppelfaltdipol der Eingangswiderstand etwa proportional zu 1/n² senken.

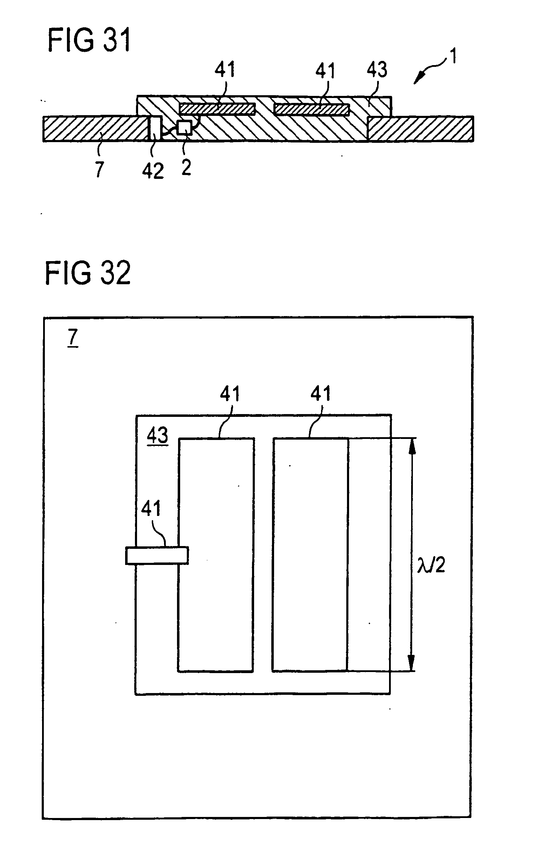

In den Fig. 31 bis 34 sind zwei weitere Ausführungsformen für Transponderchipmodule mit gefalteten Schlitzantennen dargestellt. In diesen Ausführungsformen ist jeweils neben einer ersten metallischen Fläche 41 eine weitere zweite metallische Fläche 41 vorgesehen. Die erste und die zweite metallische Fläche 41 sind so angeordnet, dass sie als gefaltete Schlitzantenne mit drei Schlitzen wirken. Vorzugsweise sind die Metallflächen 41 dabei in der gleichen Ebene angeordnet.

Fig. 31 zeigt eine in der Querschnittsansicht dargestellte Transpondereinheit 1 in einem in das metallische Trägermaterial 7 eingesetzten Zustand. Wie in der Ausführungsform gemäß Fig. 29 ist eine erste metallische Fläche 41 mit dem Chip 2 verbunden, der seinerseits über einen Kontakt 42 mit dem Trägermaterial 7 verbunden ist. In dieser Ausführungsform besteht zu einer zweiten Metallfläche 41 keine elektrisch leitende Verbindung. Das Dielektrikum 43 kann wiederum so ausgebildet sein, dass es als ein Pressteil in die Aussparung des Trägermaterials 7 eingepresst werden kann.

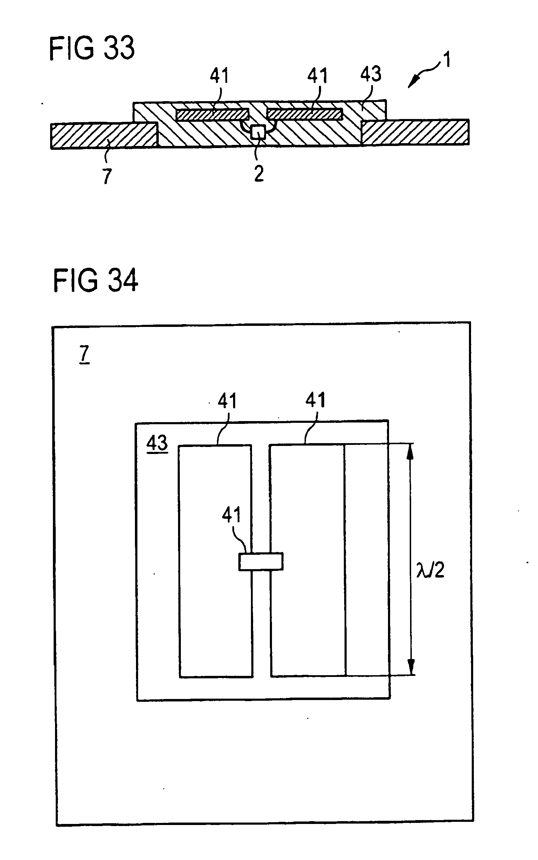

Abweichend von der vorherigen Ausführungsform ist in der in Fig. 33 und 34 dargestellten Ausführungsform keine der zwei metallischen Flächen 41 mit dem Trägermaterial 7 verbunden. Der Chip 2 ist dagegen mit beiden metallischen Flächen 41 verbunden. Für ein solches Transponderchipmodul 1 muss keine elektrische Verbindung sondern nur eine mechanische Verbindung zum Trägermaterial 7 hergestellt werden. Derartige Transponderchipmodule 1 sind somit sowohl weniger komplex in ihrer Herstellung als auch einfacher auf den Träger zu montieren, da auf eine elektrische Kontaktierung zum Trägermaterial keine Rücksicht mehr genommen werden muss. Diesen Vorteil erhält man auch, wenn mehr als die hier gezeigten 3 Schlitze (bzw. 2 Metallflächen) verwendet werden.

Die in den Fig. 31 bis 34 gezeigten Ausführungsformen bilden Transponderchipmodule mit jeweils zwei Schlitzen in der gefalteten Schlitzantenne. Sie bieten bereits durch die Auswahl der Auslegungsparameter, wie Breite und Länge der Metallflächen und Breite und Länge der Schlitze sowie des Materials des Dielektrikums im Schlitz eine gute Anpassbarkeit. Das Transponderchipmodul wird in seiner Gestaltung jedoch noch flexibler, wenn man noch mehr Schlitze vorsieht. In der Auslegung der Eigenschaften des Transponderchipmoduls muß insbesondere die Existenz des Dielektrikums im Schlitz mit berücksichtigt werden.

Die Größenangaben in den Fig. 3, 5A bis 5C, 9, 10, 15, 16, 30, 32 und 34 sind jeweils so zu verstehen, dass die Größe des Schlitzes bzw. der Metallfläche in etwa λ/2 entspricht.

## Patentansprüche

1. Transponder (100), mit einem Transponderchipmodul (1) und einer Schlitzantenne (50), wobei das Transponderchipmodul (1) einen Transponderchip (2), und zwei mit dem Transponderchip (2) elektrisch verbundene Kontaktstellen (3; 13; 21; 31) zum Kontaktieren des Transponderchipmoduls (1) mit einander gegenüberliegenden Seiten der Schlitzantenne (50) umfaßt, wobei die zwei Kontaktstellen (3) an voneinander wegweisenden Oberflächen (4) des Transponderchipmoduls (1) angeordnet sind, und wobei das Transponderchipmodul (1) in einen Schlitz (8) der Schlitzantenne (50) derart eingesetzt ist, dass es mit den zwei Kontaktstellen (3) einander gegenüberliegende Innenflächen (51) des Schlitzes kontaktiert,
**dadurch gekennzeichnet, dass** die Schlitzantenne (50) durch eine Vertiefung, die lediglich im Bereich des Schlitzes (8) offen ist, als Boxed-In-Antenne ausgebildet ist.

2. Transponder (100) nach Anspruch 1, **dadurch gekennzeichnet, dass** die voneinander wegweisenden Oberflächen (4) parallel zueinander angeordnet sind.

3. Transponder (100) nach Anspruch 1 oder 2, **dadurch gekennzeichnet, dass** die Kontaktstellen (3; 13; 21; 31) als galvanische Kontaktstellen ausgebildet sind.

4. Transponder (100) nach einem der Ansprüche 1 oder 2, **dadurch gekennzeichnet, dass** die Kontaktstellen (3; 13; 21; 31) als kapazitive Koppelstellen ausgebildet sind.

5. Transponder (100) nach einem der Ansprüche 1 bis 4, **dadurch gekennzeichnet, dass** die Kontaktstelle (3) zur kraftschlüssigen Montage im Schlitz (8) der Schlitzantenne (50) ausgebildet ist.

6. Transponder (100) nach einem der Ansprüche 1 bis 5, **gekennzeichnet durch** eine Klemmvorrichtung, Schneidklemmvorrichtung oder Klippvorrichtung zur Fixierung des Moduls in einem Schlitz der Schlitzantenne.

7. Transponder (100) nach Anspruch 6, **dadurch gekennzeichnet, dass** die Klippvorrichtung als selbstsichernde Schnappverbindung ausgebildet ist.

8. Transponder (100) nach Anspruch 6, **dadurch gekennzeichnet, dass** die Klippverbindung ein separates, mit dem Modul koppelbares Sicherungselement (15) umfasst.

9. Transponder (100) nach einem der Ansprüche 1 bis 8, **dadurch gekennzeichnet, dass** das Transponderchipmodul (1) im Querschnitt T-förmig ausgebildet ist und die Kontaktstellen (3) am zentralen T-Schenkel (6) vorgesehen sind.

10. Transponder (100) nach einem der Ansprüche 1 bis 9, **dadurch gekennzeichnet, dass** in dem Transponderchipmodul (1) mindestens ein Anpassungsmittel zum Anpassen einer Eingangsimpedanz der Schlitzantenne (50) an eine Eingangsimpedanz des Transponderchips (2) vorgesehen ist.

11. Transponder (100) nach einem der Ansprüche 1 bis 10, **dadurch gekennzeichnet, dass** das Transponderchipmodul (1) eine Länge (L) aufweist, welche mindestens die Hälfte der Länge des Schlitzes (8) der Schlitzantenne (50) beträgt.

12. Transponder (100) nach einem der Ansprüche 1 bis 11, **dadurch gekennzeichnet, dass** das Transponderchipmodul (1) mit einer Markierung versehen ist.

13. Transponder (100) nach Anspruch 12, **dadurch gekennzeichnet, dass** die Markierung eine Positionsmarkierung (80) zur Erleichterung der exakten Positionierung des Transponderchipmoduls relativ zum Schlitz (8) der Schlitzantenne bildet.

14. Transponder (100) nach einem der Ansprüche 1 bis 13, **dadurch gekennzeichnet, dass** der Transponderchip in einer Formmasse eingebettet ist.

15. Transponder (100) nach einem der Ansprüche 1 bis 14, **dadurch gekennzeichnet, dass** die Innenflächen (51) parallel zueinander ausgebildet sind.

16. Transponder (100) nach einem der Ansprüche 1 bis 15, **dadurch gekennzeichnet, dass** die Schlitzantenne (50) eine Klemmvorrichtung, Schneidklemmvorrichtung oder Klippvorrichtung innerhalb des Schlitzes (8) aufweist.

17. Transponder (100) nach einem der Ansprüche 1 bis 16, **dadurch gekennzeichnet, dass** ein die Schlitzantenne (50) bildendes Trägermaterial (7) durch eine Fahrzeugkarosserie gebildet ist.

18. Transponder nach einem der Ansprüche 1 bis 16, **dadurch gekennzeichnet, dass** die Boxed-In-Antenne durch eine kastenartige, elektrisch leitfähige Struktur (60) gebildet wird, die an einer Schmalseite frei von elektrisch leitfähigem Material ist, wobei diese Schmalseite den Schlitz (8) der Schlitzantenne bildet.

19. Transponder nach einem der Ansprüche 1 bis 16, **dadurch gekennzeichnet, dass** die Boxed-In-Antenne in einem elektrisch leitfähigen Vollmaterial (70) als Sackloch ausgebildet ist, wobei die Sacklochöffnung den Schlitz (8) der Schlitzantenne bildet.

20. Transponder nach Anspruch 19, **dadurch gekennzeichnet, dass** das Sackloch in einem Motorblock ausgebildet ist.

21. Transponder nach einem der Ansprüche 18 bis 20, **dadurch gekennzeichnet, dass** die Boxed-In-Antenne eine Tiefe besitzt, die etwa der Hälfte der Schlitzlänge entspricht.

22. Transponder nach einem der Ansprüche 18 bis 20, **dadurch gekennzeichnet, dass** die Boxed-In-Antenne Prismen- oder Pyramidenform besitzt.

23. Transponder nach einem der Ansprüche 1 bis 16 oder einem der Ansprüche 18 bis 22, **dadurch gekennzeichnet, dass** die Boxed-In-Antenne mit einem Dielektrikum (62) gefüllt ist.

24. Transponder nach Anspruch 23, **dadurch gekennzeichnet, dass** zumindest die Kontaktstellen des Transponderchipmoduls und vorzugsweise auch der Transponderchip von dem dielektrischen Material umgeben sind.

25. Transponder (100) nach einem der Ansprüche 1 bis 24, **dadurch gekennzeichnet, dass** das Transponderchipmodul (1) außerhalb der Mitte des Schlitzes (8) in Richtung zu einem Ende des Schlitzes (8) angeordnet ist.

26. Transponder (100) nach einem der Ansprüche 1 bis 25, **dadurch gekennzeichnet, dass** mindestens ein Ende des Schlitzes (8) T-förmig oder V-förmig ausgebildet ist.

27. Transponder (100) nach einem der Ansprüche 1 bis 26, **dadurch gekennzeichnet, dass** der Schlitz (8) der Schlitzantenne (50) an zumindest einer Stelle (9) eine veränderte Breite besitzt.

28. Transponder (100) nach Anspruch 27, **dadurch gekennzeichnet, dass** die Stelle mit veränderter Breite eine Verbreiterung des Schlitzes an einer Einspeisestelle der Schlitzantenne ist.

29. Transponder (100) nach Anspruch 28, **dadurch gekennzeichnet, dass** das Transponderchipmodul eine an die Stelle mit veränderter Breite des Schlitzes (8) angepasste Kontur besitzt.

30. Transponder (100) nach Anspruch 28 oder 29, **dadurch gekennzeichnet, dass** die Verbreiterung des Schlitzes rechteckförmig, kreisförmig, rautenförmig oder eine Kombination daraus ist.

31. Transponderchipmodul (1) für einen Transponder (100) mit Schlitzantenne (50), umfassend:
einen Transponderchip (2) und
zwei mit dem Transponderchip (2) elektrisch verbundene Kontaktstellen zum Kontaktieren des Transponderchips (2) mit einander gegenüberliegenden Seiten eines Antennenschlitzes (8), wobei Teile des Antennenschlitzes (8) an voneinander wegweisenden Oberflächen des Transponderchipmoduls (1) angeordnet sind und mit den beiden Kontaktstellen des Transponderchips (2) elektrisch gekoppelt sind,
**dadurch gekennzeichnet, dass** zumindest Teile des Antennenschlitzes (8) Bestandteil des Transponderchipmoduls (1) sind, und
dass die einen Bestandteil des Transponderchipmoduls (1) bildenden Teile des Antennenschlitzes (8) einen geschlossenen elektrisch leitfähigen Rahmen (60; 66) bilden, wobei der Rahmen (60; 66) eine Boxed-In-Antenne bildet, welche durch eine Vertiefung, die lediglich in Bereich des Antennenschlitzes (8) offen ist, ausgebildet ist.

32. Transponderchipmodul (1) nach Anspruch 31 **dadurch gekennzeichnet, dass** der Rahmen (60; 66) mit dielektrischem Material gefüllt ist.

33. Transponderchipmodul (1) nach Anspruch 31 oder 32, **dadurch gekennzeichnet, dass** der Rahmen (60) aus elektrisch leitfähigen Blechen gebildet ist.

34. Transponderchipmodul (1) nach Anspruch 32, **dadurch gekennzeichnet, dass** der Rahmen (66) als elektrisch leitfähige Beschichtung des den Rahmen füllenden dielektrischen Materials ausgebildet ist.

35. Transponderchipmodul (1) nach Anspruch 34, **dadurch gekennzeichnet, dass** das dielektrische Material ein keramischer Werkstoff ist.

36. Transponderchipmodul (1) nach einem der Ansprüche 31 bis 35, **gekennzeichnet durch** einen seitlich vom Transponderchipmodul abstehenden Kragen (61).

37. Transponderchipmodul (1) nach Anspruch 36, **dadurch gekennzeichnet, dass** die Boxed-In-Antenne eine Tiefe besitzt, die etwa der Hälfte der Schlitzlänge entspricht.

38. Transponderchipmodul (1) nach Anspruch 36, **dadurch gekennzeichnet, dass** die Boxed-In-Antenne Prismen- oder Pyramidenform besitzt.

39. Transponderchipmodul (1) nach einem der Ansprüche 31 bis 38, **dadurch gekennzeichnet, dass** an einer Außenseite des metallischen Rahmens mindestens eine elektrische oder elektronische Komponente (67) angebracht ist.

40. Transponderchipmodul (1) nach Anspruch 39, **dadurch gekennzeichnet, dass** als Komponente (67) eine Batterie vorgesehen ist.

41. Transponderchipmodul (1) nach Anspruch 39 oder 40, **dadurch gekennzeichnet, dass** als Komponente (67) der Transponderchip außenseitig vorgesehen ist.

42. Transponderchipmodul (1) nach einem der Ansprüche 39 bis 41, **dadurch gekennzeichnet, dass** als Komponente (67) eine zusätzliche Schnittstelle zur Übertragung von Daten und/oder Energie zum Transponderchip vorgesehen ist.

43. Transponder (100), umfassend ein Transponderchipmodul (1) nach einem der Ansprüche 32 bis 42, wobei das Transponderchipmodul in eine Aussparung (8') eines elektrisch leitfähigen Trägermaterials (7) derart eingesetzt ist, dass es mit den einen Bestandteil des Transponderchipmoduls bildenden Teilen der Schlitzantenne (50) eine elektrische Verbindung zum Trägermaterial (7) herstellt.

44. Transponder (100) nach Anspruch 43, **dadurch gekennzeichnet, dass** die elektrische Verbindung zum Trägermaterial (7) durch kapazitive Kopplung hergestellt ist.

45. Verfahren zum Herstellen eines Transponderchipmoduls nach Anspruch 34, umfassend die Schritte:
Zurverfügungstellen eines Blocks aus dielektrischem Material (60) mit einer durchgehenden Nut (64),
Einsetzen eines Chipmoduls (61) in die Nut (64), derart dass an gegenüberliegenden Seiten des Chipmoduls (61) angeordnete Kontaktflächen (62) freiliegen, und
Beschichten des Blocks einschließlich des darin eingesetzten Chipmoduls (61) mit elektrisch leitfähigem Material (66), wobei die mit der Nut (64) versehene Seite des Blocks von dieser Beschichtung freigehalten wird oder nachträglich davon befreit wird.

## Claims

1. A transponder (100), having a transponder chip module (1) and a slot antenna (50), wherein the transponder chip module (1) comprises a transponder chip (2), and two contact points (3; 13; 21; 31) electrically connected to the transponder chip (2) for contacting the transponder chip module (1) with mutually opposing sides of the slot antenna (8), wherein the two contact points (3) are arranged on mutually facing away surfaces (4) of the transponder chip module (1), and wherein the transponder chip module (1) is inserted into a slot (8) of the slot antenna (50) such that with the two contact points (3) said module contacts mutually opposing inner surfaces (51) of the slot,
**characterized in that** the slot antenna (50) is configured as a boxed-in antenna by a depression which is open only in the area of the slot (8).

2. The transponder (100) according to claim 1, **characterized in that** the mutually facing away surfaces (4) are arranged parallel to each other.

3. The transponder (100) according to claim 1 or 2, **characterized in that** the contact points (3; 13; 21; 31) are configured as galvanic contact points.

4. The transponder (100) according to either of claims 1 to 2, **characterized in that** the contact points (3; 13; 21; 31) are configured as capacitive coupling points.

5. The transponder (100) according to any of claims 1 to 4, **characterized in that** the contact point (3) is configured for force-fitting assembly in the slot (8) of the slot antenna (50).

6. The transponder (100) according to any of claims 1 to 5, **characterized by** a clamping apparatus, insulation displacement apparatus or clip apparatus for fixing the module in a slot (8) of the slot antenna.

7. The transponder (100) according to claim 6, **characterized in that** the clip apparatus is configured as a self-securing snap connection.

8. The transponder (100) according to claim 6, **characterized in that** the clip connection comprises a separate securing element (15) coupleable to the module.

9. The transponder (100) according to any of claims 1 to 8, **characterized in that** the transponder chip module (1) is configured with a T-shaped cross section and the contact points (3) are provided on the central T leg (6).

10. The transponder (100) according to any of claims 1 to 9, **characterized in that** there is provided in the transponder chip module (1) at least one adapting means for adapting an input impedance of the slot antenna (50) to an input impedance of the transponder chip (2).

11. The transponder (100) according to any of claims 1 to 10, **characterized in that** the transponder chip module (1) has a length (L) that amounts to at least half of the length of the slot (8) of the slot antenna (50).

12. The transponder (100) according to any of claims 1 to 11, **characterized in that** the transponder chip module (1) is provided with a marking.

13. The transponder (100) according to claim 12, **characterized in that** the marking constitutes a position marking (80) for facilitating the exact positioning of the transponder chip module relative to the slot (8) of the slot antenna.

14. The transponder (100) according to any of claims 1 to 13, **characterized in that** the transponder chip is embedded in a molding material.

15. The transponder (100) according to any of claims 1 to 14, **characterized in that** the inner surfaces (51) are configured parallel to each other.

16. The transponder (100) according to any of claims 1 to 15, **characterized in that** the slot antenna (50) has a clamping apparatus, insulation displacement apparatus or clip apparatus within the slot (8).

17. The transponder (100) according to any of claims 1 to 16, **characterized in that** a carrier material (7) forming the slot antenna (50) is formed by a vehicle body.

18. The transponder according to any of claims 1 to 16, **characterized in that** the boxed-in antenna is formed by a box-like, electrically conductive structure (60) which is free from electrically conductive material on a narrow side, said narrow side forming the slot (8) of the slot antenna.

19. The transponder according to any of claims 1 to 16, **characterized in that** the boxed-in antenna is configured as a blind hole in an electrically conductive solid material (70), the blind hole opening forming the slot (8) of the slot antenna.

20. The transponder according to claim 19, **characterized in that** the blind hole is configured in an engine block.

21. The transponder according to any of claims 18 to 20, **characterized in that** the boxed-in antenna possesses a depth that corresponds approximately to half the slot length.

22. The transponder according to any of claims 18 to 20, **characterized in that** the boxed-in antenna possesses a prismatic or pyramidal shape.

23. The transponder according to any of claims 1 to 16 or any of claims 18 to 22, **characterized in that** the boxed-in antenna is filled with a dielectric (62).

24. The transponder according to claim 23, **characterized in that** at least the contact points of the transponder chip module and preferably also the transponder chip are surrounded by the dielectric material.

25. The transponder (100) according to any of claims 1 to 24, **characterized in that** the transponder chip module (1) is arranged outside the center of the slot (8) in the direction toward one end of the slot (8).

26. The transponder (100) according to any of claims 1 to 25, **characterized in that** at least one end of the slot (8) is configured in a T shape or V shape.

27. The transponder (100) according to any of claims 1 to 26, **characterized in that** the slot (8) of the slot antenna (50) possesses a changed width in at least one place (9).

28. The transponder (100) according to claim 27, **characterized in that** the place with a changed width is a widening of the slot at a feed point of the slot antenna.

29. The transponder (100) according to claim 28, **characterized in that** the transponder chip module possesses a contour adapted to the place with a changed width of the slot (8).

30. The transponder (100) according to claim 28 or 29, **characterized in that** the widening of the slot is rectangular, circular, rhombic or a combination thereof.

31. A transponder chip module (1) for a transponder (100) having a slot antenna (50), comprising:
a transponder chip (2) and
two contact points electrically connected to the transponder chip (2) for contacting the transponder chip (2) with mutually opposing sides of an antenna slot (8), wherein portions of the antenna slot (8) are arranged on mutually facing away surfaces of the transponder chip module (1) and are electrically coupled to the two contact points of the transponder chip (2),
**characterized in that** at least portions of the antenna slot (8) are part of the transponder chip module (1), and
that the portions of the antenna slot (8) forming a part of the transponder chip module (1) form a closed electrically conductive frame (60; 66), wherein the frame (60; 66) forms a boxed-in antenna which is configured by a depression which is open only in the area of the antenna slot (8).

32. The transponder chip module (1) according to claim 31, **characterized in that** the frame (60; 66) is filled with dielectric material.

33. The transponder chip module (1) according to claim 31 or 32, **characterized in that** the frame (60) is formed of electrically conductive plates.

34. The transponder chip module (1) according to claim 32, **characterized in that** the frame (66) is configured as an electrically conductive coating of the dielectric material filling the frame.

35. The transponder chip module (1) according to claim 34, **characterized in that** the dielectric material is a ceramic material.

36. The transponder chip module (1) according to any of claims 31 to 35, **characterized by** a collar (61) laterally protruding from the transponder chip module.

37. The transponder chip module (1) according to claim 36, **characterized in that** the boxed-in antenna possesses a depth that corresponds approximately to half the slot length.

38. The transponder chip module (1) according to claim 36, **characterized in that** the boxed-in antenna possesses a prismatic or pyramidal shape.

39. The transponder chip module (1) according to any of claims 31 to 38, **characterized in that** at least one electrical or electronic component (67) is attached to an outer side of the metallic frame.

40. The transponder chip module (1) according to claim 39, **characterized in that** as the component (67) a battery is provided

41. The transponder chip module (1) according to claim 39 or 40, **characterized in that** as the component (67) the transponder chip is provided on the outer side.

42. The transponder chip module (1) according to any of claims 39 to 41, **characterized in that** as the component (67) an additional interface is provided for transmitting data and/or energy to the transponder chip.

43. A transponder (100), comprising a transponder chip module (1) according to any of claims 32 to 42, wherein the transponder chip module is inserted into a recess (8') of an electrically conductive carrier material (7) such that it establishes with the portions of the slot antenna (50) forming a part of the transponder chip module an electrical connection to the carrier material (7).

44. The transponder (100) according to claim 43, **characterized in that** the electrical connection to the carrier material (7) is established by capacitive coupling.

45. A method for producing a transponder chip module according to claim 34, comprising the steps of:
providing a block of dielectric material (60) having a continuous groove (64), inserting a chip module (61) into the groove (64) such that contact areas (62) arranged on opposing sides of the chip module (61) are exposed, and
coating the block including the chip module (61) inserted thereinto with electrically conductive material (66), whereby the side of the block provided with the groove (64) is kept free from said coating or subsequently freed therefrom.

## Revendications

1. Transpondeur (100), comportant un module à puce de transpondeur (1) et une antenne à fente (50), le module à puce de transpondeur (1) comprenant une puce de transpondeur (2) et deux points de contact (3; 13; 21 ; 31) connectés électriquement à la puce de transpondeur (2) pour mettre en contact le module à puce de transpondeur (1) avec des côtés opposés l'un à l'autre de l'antenne à fente (50), les deux points de contact (3) étant disposés sur des surfaces (4) opposées l'une à l'autre du module à puce de transpondeur (1), et le module à puce de transpondeur (1) étant mis en place dans une fente (8) de l'antenne à fente (50), de telle manière qu'il est en contact par les deux points de contact (3) avec des surfaces intérieures (51) de la fente opposées l'une à l'autre,
**caractérisé en ce que** l'antenne à fente (50) est réalisée comme antenne encastrée dans une cavité qui n'est ouverte qu'au niveau de la fente (8).

2. Transpondeur (100) selon la revendication 1, **caractérisé en ce que** les surfaces (4) opposées l'une à l'autre sont parallèles l'une à l'autre.

3. Transpondeur (100) selon la revendication 1 ou la revendication 2, **caractérisé en ce que** les points de contact (3 ; 13 ; 21 ; 31) sont réalisés comme points de contact galvaniques.

4. Transpondeur (100) selon l'une des revendications 1 ou 2, **caractérisé en ce que** les points de contact (3 ; 13 ; 21 ; 31) sont réalisés comme points d'accouplement capacitifs.

5. Transpondeur (100) selon l'une des revendications 1 à 4, **caractérisé en ce que** le point de contact (3) est réalisé pour un montage par liaison mécanique dans la fente (8) de l'antenne à fente (50).

6. Transpondeur (100) selon l'une des revendications 1 à 5, **caractérisé par** un dispositif à borne, dispositif à borne guillotine ou dispositif à clip pour la fixation du module dans une fente de l'antenne à fente.

7. Transpondeur (100) selon la revendication 6, **caractérisé en ce que** le dispositif à clip est réalisé comme connexion à ressort autobloquante.

8. Transpondeur (100) selon la revendication 6, **caractérisé en ce que** le dispositif à clip comprend un élément de fixation (15) séparé, pouvant être accouplé au module.

9. Transpondeur (100) selon l'une des revendications 1 à 8, **caractérisé en ce que** le module à puce de transpondeur (1) est réalisé avec une section en T et **en ce que** les points de contact (3) sont prévus contre la haste centrale du T (6).

10. Transpondeur (100) selon l'une des revendications 1 à 9, **caractérisé en ce qu'**au moins un moyen d'ajustement est prévu dans le module à puce de transpondeur (1) pour l'ajustement d'une impédance d'entrée de l'antenne à fente (50) à une impédance d'entrée de la puce de transpondeur (2).

11. Transpondeur (100) selon l'une des revendications 1 à 10, **caractérisé en ce que** le module à puce de transpondeur (1) présente une longueur (L) qui correspond au moins à la moitié de la longueur de la fente (8) de l'antenne à fente (50).

12. Transpondeur (100) selon l'une des revendications 1 à 11, **caractérisé en ce que** le module à puce de transpondeur (1) est pourvu d'un marquage.

13. Transpondeur (100) selon la revendication 12, **caractérisé en ce que** le marquage forme un marquage de position (80) pour faciliter le positionnement précis du module à puce de transpondeur par rapport à la fente (8) de l'antenne à fente.

14. Transpondeur (100) selon l'une des revendications 1 à 13, **caractérisé en ce que** la puce de transpondeur est logée dans une matière de moulage.

15. Transpondeur (100) selon l'une des revendications 1 à 14, **caractérisé en ce que** les surfaces intérieures (51) sont réalisées parallèles l'une à l'autre.

16. Transpondeur (100) selon l'une des revendications 1 à 15, **caractérisé en ce que** l'antenne à fente (50) comporte un dispositif à borne, dispositif à borne guillotine ou dispositif à clip à l'intérieur de la fente (8).

17. Transpondeur (100) selon l'une des revendications 1 à 16, **caractérisé en ce qu'**un matériau porteur (7) formant l'antenne à fente (50) est constitué par une carrosserie de véhicule.

18. Transpondeur selon l'une des revendications 1 à 16, **caractérisé en ce que** l'antenne encastrée est formée par une structure (60) en forme de caisson, électriquement conductrice, exempte de matériau électriquement conducteur sur une tranche, ladite tranche formant la fente (8) de l'antenne à fente.

19. Transpondeur selon l'une des revendications 1 à 16, **caractérisé en ce que** l'antenne encastrée est réalisée comme trou borgne dans un matériau (70) conducteur électrique massif, le trou borgne formant la fente (8) de l'antenne à fente.

20. Transpondeur selon la revendication 19, **caractérisé en ce que** le trou borgne est réalisé dans un bloc moteur.

21. Transpondeur selon l'une des revendications 18 à 20, **caractérisé en ce que** l'antenne encastrée présente une profondeur qui correspond sensiblement à la moitié de la longueur de la fente.

22. Transpondeur selon l'une des revendications 18 à 20, **caractérisé en ce que** l'antenne encastrée est en forme de prisme ou de pyramide.

23. Transpondeur selon l'une des revendications 1 à 16 ou l'une des revendications 18 à 22, **caractérisé en ce que** l'antenne encastrée est remplie d'une matière diélectrique (62).

24. Transpondeur selon la revendication 23, **caractérisé en ce qu'**au moins les points de contact du module à puce de transpondeur et de préférence aussi la puce de transpondeur sont entourés de matière diélectrique.

25. Transpondeur (100) selon l'une des revendications 1 à 24, **caractérisé en ce que** le module à puce de transpondeur (1) est disposé hors du milieu de la fente (8) vers une extrémité de la fente (8).

26. Transpondeur (100) selon l'une des revendications 1 à 25, **caractérisé en ce qu'**au moins une extrémité de la fente (8) est réalisée en forme de T ou de V.

27. Transpondeur (100) selon l'une des revendications 1 à 26, **caractérisé en ce que** la fente (8) de l'antenne à fente (50) présente une largeur modifiée à au moins un emplacement (9).

28. Transpondeur (100) selon la revendication 27, **caractérisé en ce que** l'emplacement à largeur modifiée correspond à un élargissement de la fente sur un point d'alimentation de l'antenne à fente.

29. Transpondeur (100) selon la revendication 28, **caractérisé en ce que** le module à puce de transpondeur présente un contour adapté sur l'emplacement à largeur modifiée de la fente (8).

30. Transpondeur (100) selon la revendication 28 ou la revendication 29, **caractérisé en ce que** l'élargissement de la fente a une forme rectangulaire, circulaire, en losange ou combinant celles-ci.

31. Module à puce de transpondeur (1) pour un transpondeur (100) avec une antenne à fente (50), comprenant :
une puce de transpondeur (2) et
deux points de contact connectés électriquement à la puce de transpondeur (2) pour mettre en contact le module à puce de transpondeur (2) avec des côtés opposés l'un à l'autre d'une antenne à fente (50), des parties de la fente (8) d'antenne étant disposées sur des surfaces opposées l'une à l'autre du module à puce de transpondeur (1) et électriquement couplées aux deux points de contact de la puce de transpondeur (1),
**caractérisé en ce qu'**au moins des parties de la fente (8) d'antenne sont des composants du module à puce de transpondeur (1), et
**en ce que** les parties de la fente (8) d'antenne formant un composant du module à puce de transpondeur (1) constituent un cadre (60 ; 66) fermé électriquement conducteur, ledit cadre (60 ; 66) formant une antenne encastrée réalisée dans une cavité qui n'est ouverte qu'au niveau de la fente (8) d'antenne.

32. Module à puce de transpondeur (1) selon la revendication 31, **caractérisé en ce que** le cadre (60 ; 66) est rempli de matière diélectrique.

33. Module à puce de transpondeur (1) selon la revendication 31 ou la revendication 32, **caractérisé en ce que** le cadre (60) est formé de tôles électriquement conductrices.

34. Module à puce de transpondeur (1) selon la revendication 32, **caractérisé en ce que** le cadre (66) est réalisé comme revêtement électriquement conducteur de la matière diélectrique comblant le cadre.

35. Module à puce de transpondeur (1) selon la revendication 34, **caractérisé en ce que** la matière diélectrique est une matière céramique.

36. Module à puce de transpondeur (1) selon l'une des revendications 31 à 35, **caractérisé par** un rebord (61) dépassant latéralement du module à puce de transpondeur.

37. Module à puce de transpondeur (1) selon la revendication 36, **caractérisé en ce que** l'antenne encastrée présente une profondeur qui correspond sensiblement à la moitié de la longueur de la fente.

38. Module à puce de transpondeur (1) selon la revendication 36, **caractérisé en ce que** l'antenne encastrée est en forme de prisme ou de pyramide.

39. Module à puce de transpondeur (1) selon l'une des revendications 31 à 38, **caractérisé en ce qu'**au moins un composant (67) électrique ou électronique est disposé sur un côté extérieur du cadre métallique.

40. Module à puce de transpondeur (1) selon la revendication 39, **caractérisé en ce qu'**une batterie est prévue comme composant (67).

41. Module à puce de transpondeur (1) selon la revendication 39 ou 40, **caractérisé en ce que** la puce de transpondeur est prévue comme composant (67) sur le côté extérieur.

42. Module à puce de transpondeur (1) selon l'une des revendications 39 à 41, **caractérisé en ce qu'**une interface complémentaire pour la transmission de données et/ou de courant à la puce de transpondeur est prévue comme composant (67).

43. Transpondeur (100), comprenant un module à puce de transpondeur (1) selon l'une des revendications 32 à 42, où le module à puce de transpondeur est mis en place dans une cavité (8') d'un matériau porteur (7) électriquement conducteur, de manière à réaliser une connexion électrique au matériau porteur (7) avec des parties de l'antenne à fente (50) formant un composant du module à puce de transpondeur.

44. Transpondeur selon la revendication 43, **caractérisé en ce que** la connexion électrique au matériau porteur (7) est réalisée par accouplement capacitif.

45. Procédé de fabrication d'un module à puce de transpondeur selon la revendication 34, comprenant les étapes de :
préparation d'un bloc en matière diélectrique (60) avec une rainure continue (64),
mise en place d'un module à puce (61) dans la rainure (64), de manière à laisser dégagées des surfaces de contact (62) disposées sur des côtés opposés du module à puce (61), et
revêtement du bloc, y compris du module à puce(61) qui y est mis en place, avec un matériau électriquement conducteur (66), le côté du bloc présentant la rainure (64) étant exempté de ce revêtement ou en étant débarrassé ultérieurement.
